# EUROPEAN PATENT APPLICATION

(11) **EP 4 020 839 A1**
(43) Date of publication of application: **29.06.2022**
(21) Application number: 20882079.5
(22) Date of filing: 25.08.2020
(51) Int. Cl.: H04B 10/07

(54) **PASSIVE OPTICAL NETWORK DETECTION METHOD AND APPARATUS, AND SYSTEM**

(30) Priority: 28.10.2019 CN 201911032659
(71) Applicant: Huawei Technologies Co., Ltd., Longgang District Shenzhen, Guangdong 518129 (CN)
(72) Inventor: WAN, Junqiao, Shenzhen, Guangdong 518129 (CN); ZHOU, Tao, Shenzhen, Guangdong 518129 (CN); LI, Dejun, Shenzhen, Guangdong 518129 (CN); ZHANG, Jun, Shenzhen, Guangdong 518129 (CN)
(74) Representative: Goddar, Heinz J.
(86) International application number: PCT/CN2020/111062
(87) International publication number: WO 2021/082670

(57) **Abstract**

Embodiments of this application provide a detection method for a passive optical network and an apparatus, and relate to the communications field. The method includes: if detecting that there is an abnormal ONU in a plurality of optical network units ONUs, disabling optical transmission channels between an optical splitter and the plurality of ONUs, and enabling the optical transmission channels between the optical splitter and the plurality of ONUs one by one; and in the process of enabling the optical transmission channels between the optical splitter and the plurality of ONUs one by one, if an ONU corresponding to an enabled optical transmission channel does not send an upstream optical signal in a specified timeslot through time division multiplexing, determining that the ONU corresponding to the enabled optical transmission channel is an abnormal ONU. Therefore, the abnormal ONU can be autonomously located without manual detection. This improves system reliability and practicality.

## Description

This application claims priority to Chinese Patent Application No. 201911032659.4, filed with the China National Intellectual Property Administration on October 28, 2019, and entitled "DETECTION METHOD FOR PASSIVE OPTICAL NETWORK, APPARATUS, AND SYSTEM", which is incorporated herein by reference in its entirety.

### TECHNICAL FIELD

Embodiments of this application relate to the communications field, and in particular, to a detection method for a passive optical network, an apparatus, and a system.

### BACKGROUND

Currently, in a passive optical network, if an optical line terminal (Optical Line Terminal, OLT) detects that there is an abnormal optical network unit (Optical Network Unit, ONU) in the network, the OLT delivers an instruction to all ONUs, so that all the ONUs stop upstream optical emission, to enter subsequent check and isolation procedures.

However, implementing the foregoing solution need to meet the following conditions:
(1) downstream communication between the OLT and the ONU is normal, and the ONU can receive the instruction of the OLT; and
(2) hardware and/or software such as a version of the ONU support/supports the ONU to execute the instruction delivered by the OLT.

In other words, when the abnormal ONU device does not execute the instruction from the OLT (including scenarios in which the device cannot receive the instruction and the device rejects execution after receiving the instruction), a conventional-technology solution cannot be normally executed, that is, the OLT cannot accurately locate the abnormal ONU, and cannot effectively perform operations such as isolating the abnormal ONU.

### SUMMARY

This application provides a detection method for a passive optical network, an apparatus, and a system, to provide a perfect detection manner to adapt to various application scenarios.

To achieve the foregoing objective, the following technical solutions are used in this application.

According to a first aspect, an embodiment of this application provides a passive optical network system, where the system includes an optical line terminal OLT, an optical splitter, and a plurality of optical network units ONUs.

The OLT is configured to: after detecting that there is an abnormal ONU in the plurality of ONUs, disable optical transmission channels between the optical splitter and the plurality of ONUs, and enable the optical transmission channels between the optical splitter and the plurality of ONUs one by one.

The OLT is further configured to: in the process of enabling the optical transmission channels between the optical splitter and the plurality of ONUs one by one, if an ONU corresponding to an enabled optical transmission channel does not send an upstream optical signal in a specified timeslot through time division multiplexing, determine that the ONU corresponding to the enabled optical transmission channel is an abnormal ONU.

In the foregoing manner, this application provides a superior detection manner. The OLT may check the ONUs one by one by disabling the optical transmission channels corresponding to the ONUs and enabling the optical transmission channels corresponding to the ONUs one by one, to accurately locate the abnormal ONU. Therefore, the abnormal ONU can be autonomously located without manual detection. This improves system reliability and practicality.

In a possible implementation, the system further includes a control unit, and the control unit is connected to a multiway optical switch and the OLT; the control unit is configured to turn on or turn off the multiway optical switch; and the multiway optical switch is configured to be connected to the optical splitter and the plurality of ONUs, where each way of the multiway optical switch connects the optical splitter to one of the plurality of ONUs, and each way of the multiway optical switch is configured to control an optical transmission channel corresponding to one of the plurality of ONUs to be enabled and disabled.

In the foregoing manner, enabling and disabling of the optical transmission channel are controlled by using the optical switch.

In a possible implementation, the OLT is further configured to send a turn-off instruction to the control unit, where the turn-off instruction is used to instruct the control unit to turn off the multiway optical switch based on the turn-off instruction; and the control unit is configured to turn off the multiway optical switch based on the turn-off instruction, so that the plurality of optical transmission channels are disabled.

In the foregoing manner, the control unit may receive an instruction of the OLT, and perform a corresponding action based on the instruction of the OLT. Specifically, the control unit may disable the plurality of optical transmission channels by turning off the multiway optical switch based on the instruction of the OLT, to perform a subsequent check operation.

In a possible implementation, in the process in which the OLT enables the optical transmission channels between the optical splitter and the plurality of ONUs one by one, there is at least one ONU corresponding to an enabled optical transmission channel. In the foregoing manner, the OLT may enable only an optical transmission channel corresponding to a single ONU each time. In an example, in a check process, there is only one ONU corresponding to an enabled optical transmission channel each time, so that mistaken determining caused because optical transmission channels corresponding to a plurality of ONUs are enabled. In another example, in a check process, there may be two or more ONUs corresponding to enabled optical transmission channels. In other words, after determining that a current ONU corresponding to an enabled optical transmission channel is a normal ONU, the OLT may keep the optical transmission channel corresponding to the current ONU enabled, and check a next ONU, so that check efficiency is improved.

In a possible implementation, the OLT may be further configured to isolate the abnormal ONU. Optionally, the OLT may be further configured to de-isolate the abnormal ONU after predetermined duration.

In the foregoing manner, the OLT may isolate the abnormal ONU after locating the abnormal ONU. Therefore, the abnormal ONU is quickly and autonomously isolated in this provided manner without manual intervention, thereby eliminating interference caused by the abnormal ONU to the OLT. Optionally, the OLT may autonomously restore the isolated ONU after the predetermined duration.

In a possible implementation, the OLT isolates the abnormal ONU in at least one of the following manners: sending a TX-stop instruction to the abnormal ONU, where the TX-stop instruction is used to instruct the abnormal ONU to stop sending the optical signal; indicating the control unit to cut off power remotely supplied to the abnormal ONU; and indicating the control unit to disable an optical transmission channel between the optical splitter and the abnormal ONU.

In the foregoing manner, the OLT may selectively isolate the ONU in different manners. Optionally, the OLT may isolate the ONU in all the foregoing manners to improve isolation reliability.

In a possible implementation, the OLT de-isolates the abnormal ONU in at least one of the following manners: sending a TX-permit instruction to the abnormal ONU, where the TX-permit instruction is used to instruct the abnormal ONU to send the optical signal; indicating the control unit to restore the power remotely supplied to the abnormal ONU; and indicating the control unit to enable the optical transmission channel between the optical splitter and the abnormal ONU; and if the abnormal ONU sends the upstream optical signal in the specified timeslot through time division multiplexing, determining that the abnormal ONU is restored.

In the foregoing manner, after de-isolating the ONU, the OLT may determine again whether the ONU still interferes with the OLT. If the ONU does not interfere with the OLT, the OLT may determine that the abnormal ONU has been restored. Optionally, if the ONU still interferes with the OLT, the OLT isolates the ONU again.

In a possible implementation, the control unit is further configured to: if detecting that communication between the control unit and the OLT is abnormal, disable the optical transmission channels between the optical splitter and the plurality of ONUs, and enable the optical transmission channels between the optical splitter and the plurality of ONUs one by one; and in the process of enabling the optical transmission channels between the optical splitter and the plurality of ONUs one by one, if communication between the control unit and the OLT is abnormal, determine that an ONU corresponding to an enabled optical transmission channel is an abnormal ONU.

In the foregoing manner, when there is downstream light pollution, that is, when communication between the control unit and the OLT is abnormal, the control unit may take over the passive optical network, and troubleshoot the abnormal ONU. Specifically, the control unit may disable the optical transmission channels between the optical splitter and the ONUs and enable the optical transmission channels corresponding to the ONUs one by one, and monitor an impact of an ONU corresponding to an enabled optical transmission channel on communication between the control unit and the OLT, to determine whether the ONU is an abnormal ONU. Therefore, when there is downstream light pollution, that is, when a signal of the OLT cannot reach the control unit, the abnormal ONU can be autonomously and quickly located.

In a possible implementation, the control unit may be further configured to isolate the abnormal ONU. Optionally, the control unit may be further configured to de-isolate the abnormal ONU after predetermined duration.

In the foregoing manner, when the control unit is not under control of the OLT, that is, when the control unit cannot communicate with the OLT, the control unit may isolate the abnormal ONU. Optionally, the control unit may autonomously restore the isolated ONU after the predetermined duration.

In a possible implementation, the control unit isolates the abnormal ONU in at least one of the following manners: cutting off power remotely supplied to the abnormal ONU, and disabling an optical transmission channel between the optical splitter and the abnormal ONU.

In the foregoing manner, the control unit may selectively isolate the abnormal ONU in different manners.

In a possible implementation, the control unit de-isolates the abnormal ONU in at least one of the following manners: restoring the power remotely supplied to the abnormal ONU, and enabling the optical transmission channel between the optical splitter and the abnormal ONU; and if communication between the control unit and the OLT is normal after the abnormal ONU is de-isolated, determining that the abnormal ONU is restored.

In the foregoing manner, after de-isolating the ONU, the control unit may determine again whether the ONU still interferes with the OLT. If the ONU does not interfere with the OLT, the control unit may determine that the abnormal ONU has been restored. Optionally, if the ONU still interferes with the OLT, the control unit isolates the ONU again.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

In the foregoing manner, this application proposes a remote power supply manner. The drop fiber and the wires are integrated into the optical-electrical hybrid cable, so that a fiber used to transmit an optical signal is provided for the ONU by using the optical-electrical hybrid cable, and power may be further remotely supplied to the ONU by using the wires. For example, the wires are connected to a power supply and one or more of the plurality of ONUs.

According to a second aspect, an embodiment of this application provides a detection method for a passive optical network, where the method may be applied to an OLT, and the method includes: if detecting that there is an abnormal ONU in a plurality of optical network units ONUs, disabling optical transmission channels between an optical splitter and the plurality of ONUs, and enabling the optical transmission channels between the optical splitter and the plurality of ONUs one by one; and in the process of enabling the optical transmission channels between the optical splitter and the plurality of ONUs one by one, if an ONU corresponding to an enabled optical transmission channel does not send an upstream optical signal in a specified timeslot through time division multiplexing, determining that the ONU corresponding to the enabled optical transmission channel is an abnormal ONU.

In a possible implementation, the disabling optical transmission channels between an optical splitter and the plurality of ONUs includes: indicating a control unit to turn off a multiway optical switch, where the control unit is connected to the multiway optical switch and the OLT, the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

In a possible implementation, in the process of enabling the optical transmission channels between the optical splitter and the plurality of ONUs one by one, there is at least one ONU corresponding to an enabled optical transmission channel.

In a possible implementation, the method further includes: isolating the abnormal ONU; and de-isolating the abnormal ONU after predetermined duration.

In a possible implementation, the isolating the abnormal ONU includes at least one of the following: sending a TX-stop instruction to the abnormal ONU, where the TX-stop instruction is used to instruct the abnormal ONU to stop sending the upstream optical signal; cutting off power remotely supplied to the abnormal ONU; and disabling an optical transmission channel between the optical splitter and the abnormal ONU.

In a possible implementation, the de-isolating the abnormal ONU includes: sending a TX-permit instruction to the abnormal ONU, where the TX-permit instruction is used to instruct the abnormal ONU to send the optical signal, restoring the power remotely supplied to the abnormal ONU, and enabling the optical transmission channel between the optical splitter and the abnormal ONU; and if the abnormal ONU sends the upstream optical signal in the specified timeslot through time division multiplexing, determining that the abnormal ONU is restored.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

According to a third aspect, an embodiment of this application provides a detection method for a passive optical network, where the method may be applied to a control unit, and the method includes: if detecting that communication between the control unit and an optical line terminal OLT is abnormal, disabling optical transmission channels between an optical splitter and a plurality of ONUs, and enabling the optical transmission channels between the optical splitter and the plurality of ONUs one by one; and in the process of enabling the optical transmission channels between the optical splitter and the plurality of ONUs one by one, if communication between the control unit and the OLT is abnormal, determining that an ONU corresponding to an enabled optical transmission channel is an abnormal ONU.

In a possible implementation, before the disabling optical transmission channels between an optical splitter and a plurality of ONUs, the method further includes: determining that the control unit and a physical link between the control unit and the OLT are in a normal state.

In a possible implementation, the disabling optical transmission channels between an optical splitter and a plurality of ONUs includes: turning off a multiway optical switch, where the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

In a possible implementation, in the process of enabling the optical transmission channels between the optical splitter and the plurality of ONUs one by one, there is at least one ONU corresponding to an enabled optical transmission channel.

In a possible implementation, the method further includes: isolating the abnormal ONU; and de-isolating the abnormal ONU after predetermined duration.

In a possible implementation, the isolating the abnormal ONU includes at least one of the following: cutting off power remotely supplied to the abnormal ONU, and disabling an optical transmission channel between the optical splitter and the abnormal ONU.

In a possible implementation, the de-isolating the abnormal ONU includes: restoring the power remotely supplied to the abnormal ONU, and/or enabling the optical transmission channel between the optical splitter and the abnormal ONU; and if communication between the optical splitter and the OLT is normal after the abnormal ONU is de-isolated, determining that the abnormal ONU is restored.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

According to a fourth aspect, an embodiment of this application provides an apparatus, where the apparatus is applied to an OLT, and the apparatus includes a memory and a processor, where the memory and the processor are coupled; and the memory stores program instructions, and when the program instructions are run by the processor, the apparatus is enabled to perform the following steps: if detecting that there is an abnormal ONU in a plurality of optical network units ONUs, disabling optical transmission channels between an optical splitter and the plurality of ONUs, and enabling the optical transmission channels between the optical splitter and the plurality of ONUs one by one; and in the process of enabling the optical transmission channels between the optical splitter and the plurality of ONUs one by one, if an ONU corresponding to an enabled optical transmission channel does not send an upstream optical signal in a specified timeslot through time division multiplexing, determining that the ONU corresponding to the enabled optical transmission channel is an abnormal ONU.

In a possible implementation, when the program instructions are run by the processor, the apparatus is enabled to perform the following step: indicating a control unit to turn off a multiway optical switch, where the control unit is connected to the multiway optical switch and the OLT, the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

In a possible implementation, when the program instructions are run by the processor, the apparatus is enabled to perform the following step: in the process of enabling the optical transmission channels between the optical splitter and the plurality of ONUs one by one, there is at least one ONU corresponding to an enabled optical transmission channel.

In a possible implementation, when the program instructions are run by the processor, the apparatus is enabled to perform the following steps: isolating the abnormal ONU; and de-isolating the abnormal ONU after predetermined duration.

In a possible implementation, when the program instructions are run by the processor, the apparatus is enabled to perform the following steps: sending a TX-stop instruction to the abnormal ONU, where the TX-stop instruction is used to instruct the abnormal ONU to stop sending the upstream optical signal; cutting off power remotely supplied to the abnormal ONU; and disabling an optical transmission channel between the optical splitter and the abnormal ONU.

In a possible implementation, when the program instructions are run by the processor, the apparatus is enabled to perform the following steps: sending a TX-permit instruction to the abnormal ONU, where the TX-permit instruction is used to instruct the abnormal ONU to send the optical signal, restoring the power remotely supplied to the abnormal ONU, and enabling the optical transmission channel between the optical splitter and the abnormal ONU; and if the abnormal ONU sends the upstream optical signal in the specified timeslot through time division multiplexing, determining that the abnormal ONU is restored.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

According to a fifth aspect, an embodiment of this application provides an apparatus, applied to a control unit, where the apparatus includes a memory and a processor, where the memory and the processor are coupled; and the memory stores program instructions, and when the program instructions are run by the processor, the apparatus is enabled to perform the following steps: if detecting that communication between the control unit and an optical line terminal OLT is abnormal, disabling optical transmission channels between an optical splitter and a plurality of ONUs, and enabling the optical transmission channels between the optical splitter and the plurality of ONUs one by one; and in the process of enabling the optical transmission channels between the optical splitter and the plurality of ONUs one by one, if communication between the control unit and the OLT is abnormal, determining that an ONU corresponding to an enabled optical transmission channel is an abnormal ONU.

In a possible implementation, when the program instructions are run by the processor, the apparatus is enabled to perform the following step: determining that the control unit and a physical link between the control unit and the OLT are in a normal state.

In a possible implementation, when the program instructions are run by the processor, the apparatus is enabled to perform the following step: turning off a multiway optical switch, where the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

In a possible implementation, when the program instructions are run by the processor, the apparatus is enabled to perform the following step: in the process of enabling the optical transmission channels between the optical splitter and the plurality of ONUs one by one, there is at least one ONU corresponding to an enabled optical transmission channel.

In a possible implementation, when the program instructions are run by the processor, the apparatus is enabled to perform the following steps: isolating the abnormal ONU; and de-isolating the abnormal ONU after predetermined duration.

In a possible implementation, when the program instructions are run by the processor, the apparatus is enabled to perform the following steps: cutting off power remotely supplied to the abnormal ONU, and disabling an optical transmission channel between the optical splitter and the abnormal ONU.

In a possible implementation, when the program instructions are run by the processor, the apparatus is enabled to perform the following steps: restoring the power remotely supplied to the abnormal ONU, and/or enabling the optical transmission channel between the optical splitter and the abnormal ONU; and if communication between the optical splitter and the OLT is normal after the abnormal ONU is de-isolated, determining that the abnormal ONU is restored.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

According to a sixth aspect, an embodiment of this application provides an apparatus, where the apparatus is applied to an OLT, and the apparatus includes: a processing module, configured to: if detecting that there is an abnormal ONU in a plurality of optical network units ONUs, disable optical transmission channels between an optical splitter and the plurality of ONUs, and enable the optical transmission channels between the optical splitter and the plurality of ONUs one by one.

In a possible implementation, the apparatus further includes a sending module, configured to indicate a control unit to turn off a multiway optical switch, where the control unit is connected to the multiway optical switch and the OLT, the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

In a possible implementation, in the process of enabling the optical transmission channels between the optical splitter and the plurality of ONUs one by one, there is at least one ONU corresponding to an enabled optical transmission channel.

In a possible implementation, the processing module is further configured to isolate the abnormal ONU; and the processing module is further configured to de-isolate the abnormal ONU after predetermined duration.

In a possible implementation, the processing module is further configured to: send a TX-stop instruction to the abnormal ONU, where the TX-stop instruction is used to instruct the abnormal ONU to stop sending an upstream optical signal, cut off power remotely supplied to the abnormal ONU, and disable an optical transmission channel between the optical splitter and the abnormal ONU.

In a possible implementation, the processing module is further configured to: send a TX-permit instruction to the abnormal ONU, where the TX-permit instruction is used to instruct the abnormal ONU to send the optical signal, restore the power remotely supplied to the abnormal ONU, and enable the optical transmission channel between the optical splitter and the abnormal ONU; and if the abnormal ONU sends the upstream optical signal in a specified timeslot through time division multiplexing, determine that the abnormal ONU is restored.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

According to a seventh aspect, an embodiment of this application provides an apparatus, where the apparatus is applied to a control unit, and the apparatus includes a processing module, configured to: if detecting that communication between the control unit and an optical line terminal OLT is abnormal, disable optical transmission channels between an optical splitter and a plurality of ONUs, and enable the optical transmission channels between the optical splitter and the plurality of ONUs one by one; and in the process of enabling the optical transmission channels between the optical splitter and the plurality of ONUs one by one, if communication between the control unit and the OLT is abnormal, determine that an ONU corresponding to an enabled optical transmission channel is an abnormal ONU.

In a possible implementation, the processing module is further configured to determine that the control unit and a physical link between the control unit and the OLT are in a normal state.

In a possible implementation, the processing module is further configured to turn off a multiway optical switch, where the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

In a possible implementation, in the process of enabling the optical transmission channels between the optical splitter and the plurality of ONUs one by one, there is at least one ONU corresponding to an enabled optical transmission channel.

In a possible implementation, the processing module is further configured to isolate the abnormal ONU; and the processing module is further configured to de-isolate the abnormal ONU after predetermined duration.

In a possible implementation, the processing module is further configured to: cut off power remotely supplied to the abnormal ONU, and disable an optical transmission channel between the optical splitter and the abnormal ONU.

In a possible implementation, the processing module is further configured to: restore the power remotely supplied to the abnormal ONU, and/or enable the optical transmission channel between the optical splitter and the abnormal ONU; and if communication between the optical splitter and the OLT is normal after the abnormal ONU is de-isolated, determine that the abnormal ONU is restored.

In a possible implementation, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

According to an eighth aspect, an embodiment of this application provides a remote power supply system, where the remote power supply system includes a first power supply unit, a plurality of ONUs, an optical splitter, and a plurality of optical-electrical hybrid cables.

The first power supply unit is configured to provide working voltage for the plurality of ONUs.

The plurality of optical-electrical hybrid cables include fibers and wires, where the fibers are configured to be connected to the optical splitter and the plurality of ONUs, a fiber in each of the plurality of optical-electrical hybrid cables is connected to one of the plurality of ONUs, the wires are configured to be connected to the first power supply unit and one or more of the plurality of ONUs, and wires in each of the plurality of optical-electrical hybrid cables are connected to one of the one or more ONUs.

In a possible implementation, the remote power supply system further includes a plurality of second power supply units, configured to provide working voltage for one or more of the plurality of ONUs, where each of the plurality of second power supply units provides working voltage for one of the one or more ONUs, and the second power supply unit is a local power supply of a corresponding ONU.

In a possible implementation, the first power supply unit is an uninterruptible power supply UPS.

In a possible implementation, the remote power supply system further includes a control unit.

The control unit is configured to control a plurality of voltage output ports of the first power supply unit to be enabled and disabled.

The plurality of voltage output ports correspond to the plurality of ONUs, and the plurality of voltage output ports are connected to the plurality of ONUs by using the wires.

In a possible implementation, the control unit is further configured to receive a control signal sent by an OLT, where the control signal is used to instruct the control unit to control the power supply unit, so that the power supply unit stops remotely supplying power to an abnormal ONU.

In a possible implementation, the first power supply unit is a local power supply of any of the plurality of ONUs.

According to a ninth aspect, an embodiment of this application provides a computer-readable medium, configured to store a computer program. The computer program includes instructions for performing the method according to any one of the second aspect or the possible implementations of the second aspect.

According to a tenth aspect, an embodiment of this application provides a computer-readable medium, configured to store a computer program, and the computer program includes instructions for performing the method according to any one of the third aspect or the possible implementation of the third aspect.

According to an eleventh aspect, an embodiment of this application provides a computer program. The computer program includes instructions for performing the method according to any one of the second aspect or the possible implementations of the second aspect.

According to a twelfth aspect, an embodiment of this application provides a computer program. The computer program includes instructions for performing the method according to any one of the third aspect or the possible implementations of the third aspect.

According to a thirteenth aspect, an embodiment of this application provides a chip. The chip includes a processing circuit and a transceiver pin. The transceiver pin and the processor communicate with each other through an internal connection path. The processor performs the method according to any one of the second aspect or the possible implementations of the second aspect, to control a receive pin to receive a signal and control a transmit pin to send a signal.

According to a fourteenth aspect, an embodiment of this application provides a chip. The chip includes a processing circuit and a transceiver pin. The transceiver pin and the processor communicate with each other through an internal connection path. The processor performs the method according to any one of the third aspect or the possible implementation of the third aspect, to control a receive pin to receive a signal and control a transmit pin to send a signal.

### BRIEF DESCRIPTION OF DRAWINGS

To describe the technical solutions in the embodiments of this application more clearly, the following briefly describes the accompanying drawings for describing the embodiments of this application. It is clear that the accompanying drawings in the following description show merely some embodiments of this application, and a person of ordinary skill in the art may derive other drawings from these accompanying drawings without creative efforts.
FIG. 1 is a schematic diagram of a communications system according to an embodiment of this application;
FIG. 2 is a schematic diagram depicting a structure of an optical splitter and electrical combiner according to an embodiment of this application;
FIG. 3 is a schematic flowchart of a detection method for a passive optical network according to an embodiment of this application;
FIG. 4 is a schematic diagram of a communications system according to an embodiment of this application;
FIG. 5 is a schematic diagram of a communications system according to an embodiment of this application;
FIG. 6A and FIG. 6B are a schematic flowchart of a detection method for a passive optical network according to an embodiment of this application;
FIG. 7 is a schematic flowchart of a method for de-isolating an abnormal ONU according to an embodiment of this application;
FIG. 8A and FIG. 8B are a schematic flowchart of a detection method for a passive optical network according to an embodiment of this application;
FIG. 9A and FIG. 9B are a schematic flowchart of a detection method for a passive optical network according to an embodiment of this application;
FIG. 10 is a schematic flowchart of a detection method for a passive optical network according to an embodiment of this application;
FIG. 11 is a schematic flowchart of a detection method for a passive optical network according to an embodiment of this application;
FIG. 12 is a schematic diagram depicting a structure of a control unit according to an embodiment of this application;
FIG. 13 is a schematic flowchart of a detection method for a passive optical network according to an embodiment of this application;
FIG. 14 is a schematic diagram depicting a structure of an optical splitter and electrical combiner according to an embodiment of this application;
FIG. 15 is a schematic diagram depicting a structure of an optical-electrical hybrid cable according to an embodiment of this application;
FIG. 16a is a schematic diagram depicting a structure of an optical splitter and electrical combiner according to an embodiment of this application;
FIG. 16b is a schematic diagram depicting a structure of an optical splitter and electrical combiner according to an embodiment of this application;
FIG. 17 is a schematic diagram depicting a structure of an OLT according to an embodiment of this application;
FIG. 18 is a schematic diagram depicting a structure of an optical splitter and electrical combiner according to an embodiment of this application; and
FIG. 19 is a schematic diagram depicting a structure of an apparatus according to an embodiment of this application.

### DESCRIPTION OF EMBODIMENTS

The following clearly and completely describes the technical solutions in the embodiments of this application with reference to the accompanying drawings in the embodiments of this application. It is clear that the described embodiments are some but not all of the embodiments of this application. All other embodiments obtained by a person of ordinary skill in the art based on the embodiments of this application without creative efforts shall fall within the protection scope of this application.

The term "and/or" in this specification describes only an association relationship for describing associated objects and represents that three relationships may exist. For example, A and/or B may represent the following three cases: only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are intended to distinguish between different target objects but do not indicate a particular order of the target objects.

In addition, in the embodiments of this application, the word "example" or "for example" is used to represent giving an example, an illustration, or a description. Any embodiment or design scheme described as an "example" or "for example" in the embodiments of this application should not be explained as being more preferred or having more advantageous than another embodiment or design scheme. Specifically, use of the word "example", "for example", or the like is intended to present a related concept in a specific manner.

In the description of the embodiments of this application, unless otherwise stated, "a plurality of' means two or more than two. For example, a plurality of processing units are two or more processing units. A plurality of systems are two or more systems.

To make a person skilled in the art better understand this application, devices in this application and functions thereof are first briefly described.

A passive optical network (Passive Optical Network, PON) includes an OLT, an optical distribution network (Optical Distribution Network, ODN), and an optical network unit (Optical Network Unit, ONU)/an optical network terminal (Optical Network Terminal, ONT). The OLT is connected to the ONU by using the ODN. The ODN is a passive optical distribution network including a fiber and one or more levels of optical splitters.

An optical signal in the PON is used to implement a point-to-multipoint (P2MP) connection between one PON port of the OLT and a plurality of ONUs through split and combination by a passive optical splitter. A gigabit PON (Gigabit Passive Optical Network, GPON) is used as an example. Optical wavelengths of 1310 nm and 1490 nm are respectively used in upstream transmission and downstream receiving by the ONU. It should be noted that "upstream" means an optical transmission channel (which may also be referred to as an upstream optical transmission channel) from the ONU to the OLT, and "downstream" means an optical transmission channel (which may also be referred to as a downstream optical transmission channel) from the OLT to the ONU.

In the passive optical network, if an ONU generates "light pollution", a connection problem may occur in all the other ONUs connected to the PON port, or normal operating of a service may be affected. "Light pollution" means that an access point device of the ONU emits light without complying with a technical specification constraint of the GPON, or means that a light emitting signal interferes with a normal upstream or downstream optical signal at a GPON port due to human damage. Specifically, in a normal case, the GPON port is used to provide downstream broadcast transmission by using a wavelength of 1490 nm. If a center frequency of the light emitted by the access point device of the ONU approximates to 1490 nm, downstream communication at the GPON port may be interfered with. In an upstream direction, the GPON port is used to use a wavelength of 1310 nm and perform upstream transmission through time division multiplexing. If the center frequency of the light emitted by the access point device of the ONU approximates to 1310 nm, and the access point device of the ONU does not emit light in an allocated specified timeslot, light of an upstream wavelength is interfered with, and consequently upstream communication fails.

It should be noted that, as described above, time division multiplexing is used in upstream transmission in the passive optical network. Specifically, the OLT allocates a specified time slice (or may be referred to as a specified timeslot) to each ONU, and indicates the ONUs to perform upstream transmission in respective specified timeslots, that is, send an upstream optical signal in the specified timeslot.

Further, it should be noted that the access device of the ONU may be understood as an access device that serves as an ONU in the passive optical network. Usually, the access point device is an optical access terminal that supports a PON protocol. However, in a special case, for example, in a scenario in which a switch is mistakenly considered as an ONU and accesses the passive optical network due to a human factor and the like, it is clear that the switch does not support the PON protocol and is a non-ONU device. However, for the OLT, the switch still serves as an ONU. In other words, a node (or an access point) that should originally access the ONU mistakenly accesses the switch, and the switch is an access point device of an ONU in the optical network when "light pollution" caused by the switch is not troubleshot. A scenario in which the switch is mistakenly accessed is used as an example. If a wavelength of light emitted by the switch approximates to an upstream or downstream optical wavelength at the PON port, communication of all the other ONUs connected to the PON port may be affected. In other words, in a commercial or industrial multi-user scenario, for example, in a fiber to the building (Fiber to the Building, FTTB) scenario, each ONU may correspond to users in a building, and these users are all affected. In addition, in a check process, because the switch does not support the PON protocol, an instruction delivered by the OLT, for example, a command for instructing the access point device of the ONU to stop emitting light, cannot be executed, and this type of pollution may be referred to as "upstream light pollution". Another type of "light pollution" may be referred to as "downstream light pollution". Specifically, when the passive optical network has "downstream light pollution", no instruction delivered by the OLT can reach each ONU. In other words, when there is "downstream light pollution", an instruction that is delivered by the OLT and that is used to instruct the ONU to stop emitting light cannot be executed either.

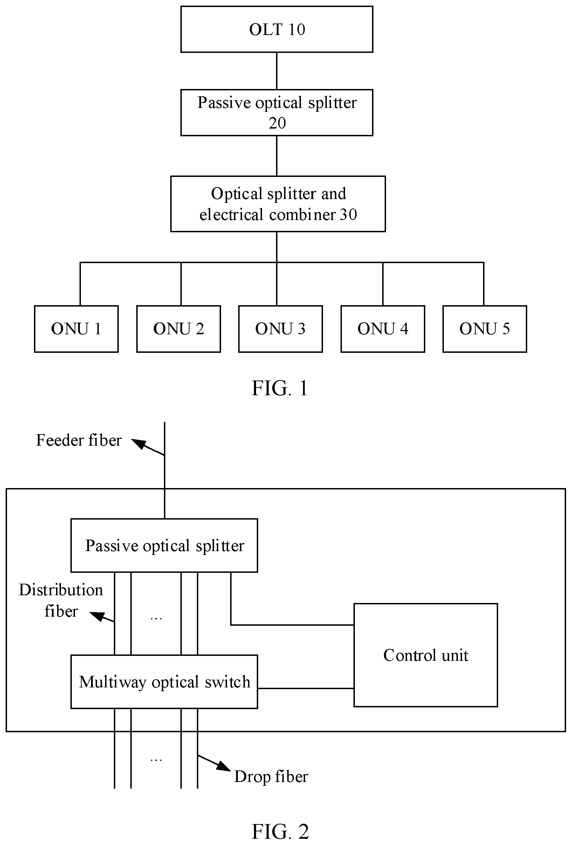

Before the technical solutions in the embodiments of this application are described, a communications system in the embodiments of this application is first described with reference to the accompanying drawings. FIG. 1 is a schematic diagram of a communications system according to an embodiment of this application. The communications system includes an OLT 10, a passive optical splitter 20, an optical splitter and electrical combiner 30, and a plurality of ONUs that include an ONU 1, an ONU 2, an ONU 3, an ONU 4, and an ONU 5. It should be noted that, in actual application, there may be one or more devices of each type. Quantities of devices in the communications system shown in FIG. 1 are only adaptive examples. This is not limited in this application. It should be noted that, in this application, only two levels of split including a level-1 optical splitter (the passive optical splitter 20) and a level-2 optical splitter (the optical splitter and electrical combiner 30) are used as an example for description. This application is also applicable to another scenario, for example, a scenario of one level of split including only an optical splitter and electrical combiner or a plurality of levels of split.

In a possible implementation, the optical splitter and electrical combiner may include a passive optical splitter, a multiway optical switch, and a control unit. The passive optical splitter is configured to split an input optical signal. For example, if a split ratio of the passive optical splitter is 1:32, the passive optical splitter may split the input optical signal into 32 optical signals. The multiway optical switch is configured to be connected to the passive optical splitter and the ONUs, and each channel of switch is configured to be connected to the passive optical splitter and one of the plurality of ONUs. In other words, the multiway optical switch is turned off and turned on, so that optical transmission channels corresponding to corresponding ONUs can be disabled and enabled. The control unit may be configured to send a control signal to the multiway optical switch to turn on or turn off the optical switches. It should be noted that, in this application, the control unit sends an electrical signal to the optical switch. Therefore, power needs to be supplied to the control unit by using a power supply. A power supply solution of the control unit is described in the following embodiments.

It should be noted that, in an example, the passive optical splitter, the multiway optical switch, and the control unit may be integrated together, for example, constitute the optical splitter and electrical combiner in this application. In another example, the passive optical splitter, the multiway optical switch, and the control unit may be independent. In this example, functions implemented by the passive optical splitter, the multiway optical switch, and the control unit are the same as those implemented through integration into the optical splitter and electrical combiner. No example is separately provided for description in this application.

FIG. 2 is a possible schematic diagram depicting a structure of an optical splitter and electrical combiner (for example, the optical splitter and electrical combiner 30). The optical splitter and electrical combiner includes a passive optical splitter, a multiway optical switch, and a control unit. The multiway optical switch correspond to a plurality of optical transmission channels between the passive optical splitter (the passive optical splitter disposed in the optical splitter and electrical combiner) and ONUs. In other words, each split path (which may also be referred to as a distribution fiber) of the passive optical splitter is connected to a channel of optical switch. The passive optical splitter is connected to an upper-level device by using a fiber (which may also be referred to as a feeder fiber), for example, the passive optical splitter 20. The optical switch is connected to a PON port of the ONU by using a drop fiber. The optical switch may implement blocking or unblocking of an optical signal at a split port of the passive optical splitter. The split port is a port between the distribution fiber of the passive optical splitter and the drop fiber. In other words, the optical switch may disable or enable the split port to control the optical transmission channel between the passive optical splitter and the ONU to be conducted and disabled. In addition, a management interface of the control unit may be, for example, a network port or another communications interface (for example, a serial port), and is connected to the passive optical splitter by using a built-in PON port, to implement communication with an OLT. Alternatively, it may be understood that one distribution fiber of the passive optical splitter is connected to the control unit, so that the control unit communicates with the OLT by using the passive optical splitter. The control unit is connected to the multiway optical switch through an optical control interface, to control the multiway optical switch to be turned on and turned off.

Specifically, in this application, when it is detected that there is an abnormal ONU, the optical transmission channels between the optical splitter and the plurality of ONUs may be disabled, and in a check process, the optical transmission channels between the optical splitter and the plurality of ONUs are enabled one by one to locate the abnormal ONU and isolate the abnormal ONU. Optionally, in this application, a device that performs the foregoing steps may be the OLT. For details, refer to Scenario 1. Optionally, the device that performs the foregoing steps may be the control unit. For details, refer to Scenario 2. It should be noted that the abnormal ONU described in this application is an ONU that abnormally emits light, or an access device of the ONU that abnormally emits light. In other words, for the OLT or the optical splitter and electrical combiner, an abnormal access device may be referred to as an abnormal ONU, and the abnormal access device includes an ONU device and a non-ONU device.

With reference to the foregoing schematic diagram of the communications system shown in FIG. 1, the following describes specific implementation solutions of this application.

### Scenario 1

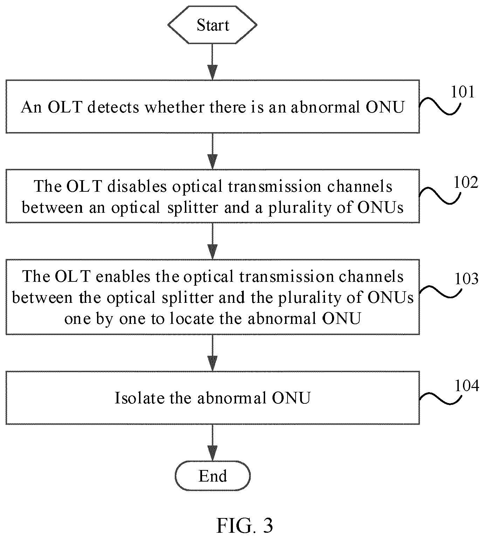

With reference to FIG. 1, FIG. 3 is a schematic flowchart of a detection method for a passive optical network according to an embodiment of this application. In FIG. 3, the following steps are included.

Step 101. An OLT detects whether there is an abnormal ONU.

Specifically, in this application, a manner in which the OLT detects whether there is an abnormal ONU may include the following:
Manner 1. If there is an idle timeslot, the OLT may detect whether there is an upstream optical signal in the idle timeslot, to determine whether there is an abnormal ONU.
Manner 2. If there is no idle timeslot, the OLT may stop allocating a timeslot to each ONU to detect whether there is an upstream optical signal and determine whether there is an abnormal ONU.

Specifically, as described above, upstream transmission in the passive optical network is performed through time division multiplexing, and each ONU sends the upstream optical signal in a specified timeslot allocated by the OLT to the ONU. For example, the idle timeslot may be a timeslot that is not allocated to any ONU. Optionally, in Manner 1, in a system running process, if detecting an upstream optical signal in the idle timeslot, the OLT may determine that there is an abnormal ONU. Optionally, in Manner 2, if there is no idle timeslot, the OLT cannot detect, by using the idle timeslot, whether there is an abnormal ONU. The OLT may stop allocating a timeslot to each ONU, and each ONU cannot obtain the specified timeslot. In this case, a normal ONU (non-abnormal ONU) stops sending the optical signal. In addition, all current timeslots may be understood as idle timeslots. In this case, if detecting an upstream optical signal in the idle timeslot, the OLT may determine that there is an abnormal ONU.

In a possible implementation, a condition for triggering Manner 2 may be as follows: If the OLT detects there is an offline ONU and there is no idle timeslot, the OLT may detect, in Manner 2, whether there is an abnormal ONU.

In a possible implementation, after detecting an upstream optical signal in the idle timeslot for a plurality of times, the OLT determines that there is an abnormal ONU, to avoid mistaken determining.

Step 102. The OLT disables optical transmission channels between an optical splitter and a plurality of ONUs.

Specifically, in this application, when detecting that there is an abnormal ONU, the OLT may indicate a control unit to turn off a multiway optical switch to disable the optical transmission channels between the OLT and the plurality of ONUs.

For example, when detecting that there is an abnormal ONU, the OLT may send a turn-off instruction to the control unit (which may be, for example, a control unit in an optical splitter and electrical combiner) to instruct the control unit to turn off the multiway optical switch in the optical splitter and electrical combiner, to disable the optical transmission channels between the optical splitter (for example, a passive optical splitter in the optical splitter and electrical combiner) and the plurality of ONUs. In other words, in this application, the optical transmission channel is disabled through physical isolation, to forcibly break down communication between the OLT and the ONU. In this case, the OLT does not receive an optical signal sent by any ONU connected to the optical splitter and electrical combiner. Similarly, the ONU connected to optical splitter and electrical combiner does not receive an instruction or a signal of the OLT.

Step 103. The OLT enables the optical transmission channels between the optical splitter and the plurality of ONUs one by one to locate the abnormal ONU.

Specifically, the OLT indicates the control unit in the optical splitter and electrical combiner to turn on the multiway optical switch one by one, to conduct (or enable) the optical transmission channels between the optical splitter (for example, the passive optical splitter in the optical splitter and electrical combiner) and the ONUs to locate the abnormal ONU. Optionally, the OLT may send a turn-on instruction to the control unit to instruct the control unit to turn on a specified optical switch.

In an example, in a check process, there is only a single ONU corresponding to an enabled optical transmission channel. To be specific, in a process in which the OLT indicates the control unit to enable the optical transmission channels corresponding to the ONUs one by one, the OLT may indicate the control unit to turn on a single optical switch, turn off the optical switch after the OLT determines that an ONU corresponding to the optical switch is a non-abnormal ONU, and then turn on a next optical switch.

In another example, in a check process, there may be two or more ONUs corresponding to enabled optical transmission channels. To be specific, in a process in which the OLT indicates the control unit to enable the optical transmission channels corresponding to the ONUs one by one, the OLT may indicate the control unit to turn on one optical switch, and turn on a next optical switch after the OLT determines that an ONU corresponding to the optical switch is a non-abnormal ONU. In this case, there are two optical switches turned on, that is, there are two ONUs corresponding to enabled optical transmission channels. It should be noted that, in this check manner, if the OLT detects that there is an abnormal ONU, an ONU that corresponds to an optical switch turned on last and that is in a plurality of ONUs corresponding to optical switches turned on is an abnormal ONU.

Specifically, in this application, after indicating the control unit to turn on an optical switch, the OLT may detect whether an upstream optical signal is received in the idle timeslot, to determine whether an ONU corresponding to the optical switch is an abnormal ONU. For example, referring to FIG. 1, after indicating the control unit to turn on an optical switch corresponding to an ONU 1, the OLT may detect whether an upstream optical signal is received in the idle timeslot. If the OLT detects an upstream optical signal in the idle timeslot, the OLT determines that the ONU 1 is an abnormal ONU. If the OLT does not detect an upstream optical signal in the idle timeslot, the OLT determines that the ONU 1 is a non-abnormal ONU. Then, the OLT may indicate the control unit to turn off the optical switch corresponding to the ONU 1 and turn on an optical switch corresponding to an ONU 2, and repeat the foregoing steps until all the ONUs are checked.

In a possible implementation, if the OLT detects, in Manner 1 (namely, by using an existing idle timeslot) in a detection phase (namely, step 101), whether there is an abnormal ONU, in a check step (namely, step 103), each ONU (a normal ONU) sends the optical signal based on the specified timeslot allocated by the OLT to the ONU. Therefore, the OLT may detect, by using the existing idle timeslot, whether an upstream optical signal is received, to determine whether an ONU corresponding to an enabled optical transmission channel is an abnormal ONU.

In another possible implementation, if the OLT performs detection in Manner 1 in a detection phase, in step 102, before disabling the optical transmission channels, the OLT may stop allocating a timeslot to each ONU. In this case, all timeslots are idle timeslots. The OLT performs step 103. In this case, if detecting an upstream optical signal, the OLT determines that an ONU corresponding to an enabled optical transmission channel is an abnormal ONU.

In still another possible implementation, if the OLT performs detection in Manner 2 in a detection phase, all timeslots are idle timeslots. Therefore, if detecting an upstream optical signal, the OLT determines that an ONU corresponding to an enabled optical transmission channel is an abnormal ONU.

In still another possible implementation, if the OLT performs detection in Manner 2 in a detection phase, the OLT may allocate a specified timeslot only to the control unit, so that the control unit can send an upstream signal in the specified timeslot to feed back to the OLT whether an instruction of the OLT has been successfully received. Therefore, a check delay is reduced. Correspondingly, in the check process, if detecting an upstream optical signal in the idle timeslot, namely, a timeslot other than the specified timeslot allocated to the control unit, the OLT determines that an ONU corresponding to an enabled optical transmission channel is an abnormal ONU.

It should be noted that, because the control unit communicates with the OLT by using the passive optical splitter, for the OLT, the control unit may also be considered as an ONU. Correspondingly, after the OLT stops allocating a timeslot to each ONU, the control unit cannot obtain a corresponding timeslot either. Therefore, the control unit in a normal state does not send an upstream optical signal, and communication between the OLT and the control unit is unidirectional, that is, the OLT may send an instruction or a signal to the control unit, and the control unit does not send a signal to the OLT. Optionally, in the detection process in step 101, when stopping allocating a timeslot to each ONU, the OLT may continue to allocate a timeslot to the control unit. Correspondingly, in step 102, after the OLT indicates the control unit to turn off each optical switch, the control unit may send an upstream signal to the OLT after receiving an instruction of the OLT, to notify the OLT that the control unit has received the instruction and performs an action based on the instruction.

Step 104. Isolate the abnormal ONU.

Specifically, in this application, after locating the abnormal ONU, the OLT may isolate the abnormal ONU by performing at least one of the following isolation manners. The isolation manners include: sending a TX-stop instruction to the abnormal ONU to instruct the abnormal ONU to stop sending the upstream optical signal, cutting off power remotely supplied to the abnormal ONU (this manner is described in detail in the following embodiments), and turning off an optical switch corresponding to the abnormal ONU to disable an optical transmission channel corresponding to the abnormal ONU.

It should be noted that, after the power remotely supplied to the ONU is cut off and/or the optical switch corresponding to the ONU is turned off, the abnormal ONU cannot receive an instruction (for example, the TX-stop instruction). Therefore, if the OLT uses one or a combination of the manner of sending the TX-stop instruction to the abnormal ONU and the other two isolation manners, the manner of sending the TX-stop instruction to the abnormal ONU has a highest priority. In other words, the OLT preferably uses this isolation manner.

For example, the OLT may send the TX-stop instruction to the abnormal ONU, and after sending the instruction, detect whether an upstream optical signal is received in the idle timeslot. If detecting no upstream optical signal, the OLT determines that isolation succeeds. On the contrary, if detecting an upstream optical signal, the OLT may power off the abnormal ONU, disable the optical transmission channel, and/or perform other processing.

For example, if the OLT still detects an upstream optical signal in the idle timeslot after cutting off the power remotely supplied to the abnormal ONU, the OLT may send the TX-stop instruction to the abnormal ONU, disable the optical transmission channel corresponding to the abnormal ONU, and/or perform other processing.

It should be noted that the step of isolating the abnormal ONU is performed immediately after the OLT locates the abnormal ONU. For example, the OLT determines that the ONU 1 is an abnormal ONU, isolates the ONU 1, and then checks another ONU.

Optionally, after checking all the ONUs and isolating the abnormal ONU, the OLT resumes a normal processing procedure. For example, if the OLT disables the timeslot of each ONU in the detection process and/or the check process, in a process of resuming the normal processing procedure, the OLT indicates the control unit to turn on each optical switch, and re-allocates a timeslot to each ONU.

In a possible implementation, after isolating the abnormal ONU for predetermined duration, the OLT may de-isolate the abnormal ONU. The predetermined duration may be set based on an actual requirement, for example, 10 minutes. This is not limited in this application. The OLT de-isolates the abnormal ONU in the following manners: sending a TX-permit instruction to the abnormal ONU to instruct the abnormal ONU to resume sending the upstream signal, restoring the power remotely supplied to the abnormal ONU, and turning on the optical switch corresponding to the abnormal ONU to enable the optical transmission channel corresponding to the abnormal ONU. It should be noted that the de-isolation step needs to correspond to the isolation step. For example, in the isolation process, if the OLT cuts off the power supplied to the abnormal ONU, in the isolation process, the OLT needs to restore the power supplied to the abnormal ONU.

Optionally, in a process of de-isolating the abnormal ONU, the OLT de-isolates abnormal ONUs one by one to avoid mistaken determining. For example, referring to FIG. 1, if the ONU 1 and the ONU 2 are abnormal ONUs and have been isolated, the OLT may de-isolate the ONU 1 after the predetermined duration. In this case, the ONU 2 still remains isolated. In an example, the OLT may perform step 101 again. In other words, the OLT performs operations such as detection, check, and isolation again. If the ONU 1 is still an abnormal ONU, the OLT isolates the ONU 1 again, and performs a de-isolation operation on the ONU 2. In another example, the OLT may skip step 101, and directly perform step 102. In other words, the OLT turns off all the optical switches to disable the optical transmission channels corresponding to the ONUs. Then, the OLT may indicate the control unit to turn on the optical switch corresponding to the ONU 1, to enable an optical transmission channel corresponding to the ONU 1 and detect whether the ONU 1 is restored. For other details, refer to the foregoing descriptions. Details are not described herein again.

Optionally, after de-isolating the abnormal ONU and detecting the abnormal ONU again, if determining that the ONU is still an abnormal ONU, in this application, the OLT may punish the ONU. A punishment manner may be increasing an interval for de-isolating the ONU next time. For example, original predetermined duration is 10 minutes. If the ONU is still in an abnormal state after the abnormal ONU is de-isolated, the OLT may increase the interval for restoring the ONU next time, for example, increase the interval to 20 minutes. In other words, after isolating the ONU again, the OLT needs to perform detection for 20 minutes, and then attempts to de-isolate the ONU.

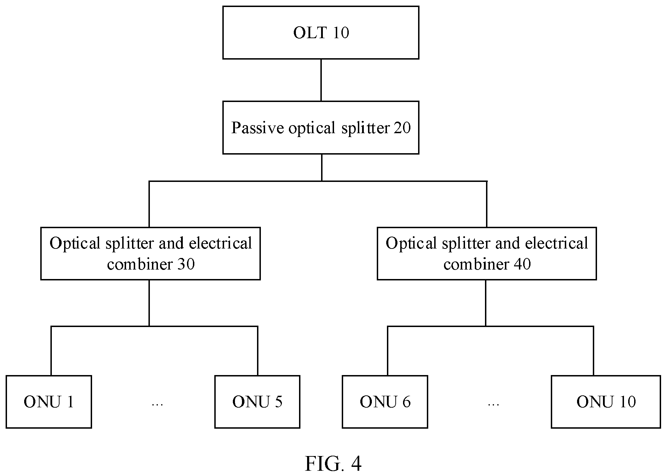

In a possible implementation, on the basis of the communications system shown in FIG. 1, as shown in FIG. 4, a passive optical splitter 20 may be connected to a plurality of optical splitter and electrical combiners (for example, an optical splitter and electrical combiner 30 and an optical splitter and electrical combiner 40 in the figure). In this case, the OLT sends a turn-off instruction to a control unit in each optical splitter and electrical combiner to turn off optical switches in the optical splitter and electrical combiner. In addition, steps such as check and isolation performed on ONUs connected to each optical splitter and electrical combiner are the same as those corresponding to the optical splitter and electrical combiner 30 described in this application. Details are not described again in this application.

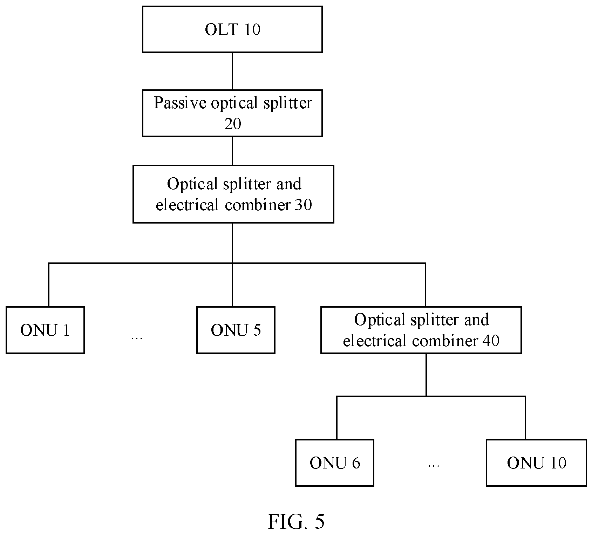

In a possible implementation, on the basis of the communications system shown in FIG. 1, as shown in FIG. 5, a plurality of ONUs and one or more optical splitter and electrical combiners (for example, an optical splitter and electrical combiner 40 in the figure, briefly referred to as a level-3 optical splitter and electrical combiner below) may be connected to an optical splitter and electrical combiner 30. In this scenario, the OLT may send a turn-off instruction to the optical splitter and electrical combiner 30 to turn off a multiway optical switch in the optical splitter and electrical combiner 30. In other words, optical switches that correspond to the level-3 optical splitter and electrical combiner and that are in the optical splitter and electrical combiner 30 are also turned off. In a check process, the OLT may first check ONUs connected to the level-3 optical splitter and electrical combiner. To be specific, the OLT may send an instruction to a control unit in the level-3 optical splitter and electrical combiner to instruct the control unit in the level-3 optical splitter and electrical combiner to turn on the optical switches one by one, and perform a check operation. If there is no abnormal ONU in the ONUs connected to the level-3 optical splitter and electrical combiner, the OLT indicates the control unit in the optical splitter and electrical combiner 30 to turn off the optical switches corresponding to the optical splitter and electrical combiner and enable optical switches corresponding to other ONUs one by one, to perform an operation such as check.

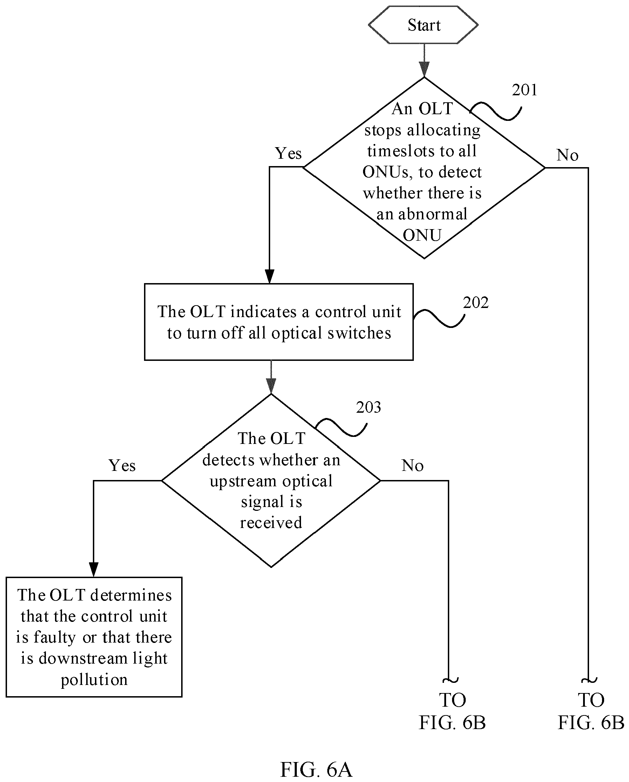

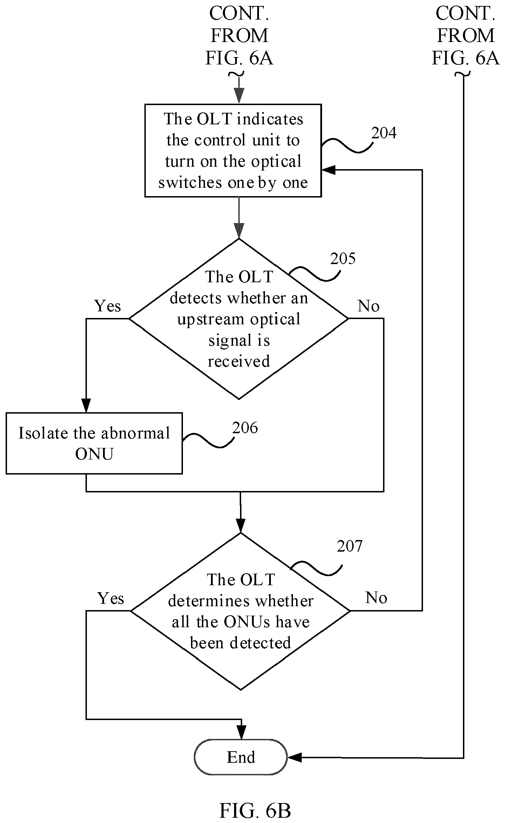

With reference to FIG. 1, on the basis of the embodiment shown in FIG. 3, FIG. 6A and FIG. 6B are a schematic flowchart of an example of a detection method for a passive optical network. In FIG. 6A and FIG. 6B, the following steps are included.

Step 201. An OLT stops allocating timeslots to all ONUs, to detect whether there is an abnormal ONU.

Specifically, the OLT determines, based on whether an upstream optical signal is received in an idle timeslot, whether there is an abnormal ONU. Optionally, the idle timeslot may be an existing idle timeslot, or may be a timeslot that is spared after the OLT stops allocating timeslots to the ONUs. For details, refer to step 101. Details are not described herein again.

In this embodiment, an example in which the OLT uses Manner 2 (namely, a manner of stopping allocating timeslots to all the ONUs) in the foregoing embodiment is used for description.

Step 202. The OLT indicates a control unit to turn off all optical switches.

Specifically, the OLT sends a turn-off instruction to the control unit. The instruction is used to instruct the control unit to turn off a multiway optical switch in an optical splitter and electrical combiner to disable optical transmission channels between a passive optical splitter in the optical splitter and electrical combiner and the ONUs. For details, refer to step 102. Details are not described herein again.

Step 203. The OLT detects whether an upstream optical signal is received.

Specifically, after sending the turn-off instruction to the control unit in the optical splitter and electrical combiner, the OLT expects to disable the optical transmission channel corresponding to each ONU, so that the OLT no longer receives an optical signal of any ONU. In an example, if the OLT still detects an upstream optical signal after sending the turn-off instruction, the OLT may determine that the turn-off instruction fails to reach the control unit, or the control unit fails to execute the instruction after receiving the instruction. In other words, a reason for this case may be as follows: (1) There is currently "downstream light pollution", and consequently the instruction of the OLT fails to reach the control unit. (2) The control unit is faulty.

Optionally, in the foregoing case, the control unit in the optical splitter and electrical combiner in this application may take over the passive optical network and perform processing. Details are described in Scenario 2.

Optionally, if detecting no upstream optical signal after sending the turn-off instruction, the OLT performs step 204.

Step 204. The OLT indicates the control unit to turn on the optical switches one by one.

Specifically, referring to FIG. 1, the OLT sends a turn-on instruction 1 to the control unit. The instruction is used to instruct the control unit to turn on an optical switch corresponding to an ONU 1 to conduct an optical transmission channel corresponding to the ONU 1.

For details, refer to step 103. Details are not described herein again.

Step 205. The OLT detects whether an upstream optical signal is received.

Specifically, in a check process, a timeslot of each ONU (including the control unit) is still disabled (which may be alternatively understood that no ONU obtains a corresponding timeslot). In other words, all timeslots may be considered as idle timeslots. In addition, after the OLT indicates the control unit to turn on the optical switch corresponding to the ONU 1, in a normal case, the OLT does not detect an upstream optical signal in any timeslot (the idle timeslot).

In an example, if detecting an upstream optical signal, the OLT may determine that an ONU (namely, the ONU 1) corresponding to an enabled optical transmission channel emits light in the idle timeslot and is an abnormal ONU, and perform step 206.

Optionally, to avoid mistaken determining caused by a signal delay, after sending the turn-on instruction, the OLT may wait for specified duration (which may be set based on an actual requirement), and then check a next ONU. Optionally, the OLT may further repeatedly send the turn-on instruction for a plurality of times. This can further reduce a probability of mistaken determining.

In another example, if detecting no upstream optical signal, the OLT performs step 207.

Step 206. Isolate the abnormal ONU.

Specifically, in this embodiment, an example in which the OLT indicates the ONU to stop sending the upstream optical signal, turns off an optical switch corresponding to the abnormal ONU, cuts off power remotely supplied to the ONU is used for description.

Step 207. The OLT determines whether all the ONUs have been detected.

Specifically, if the OLT has detected all the ONUs, the OLT performs step 208. If the OLT does not detect all the ONUs, the OLT repeats step 204 to step 207.

Specifically, in this embodiment, after the OLT detects that the ONU 1 is an abnormal ONU and isolates the ONU 1, if the OLT determines that all the ONUs are not processed, the OLT returns to step 204. To be specific, the OLT sends a turn-on instruction 2 to the control unit. The instruction is used to instruct the control unit to turn on an optical switch corresponding to an ONU 2 to conduct an optical transmission channel corresponding to the ONU 2. Then, the OLT may perform operations such as check and isolation on the ONU 2, and perform the foregoing processing on another ONU. Details are not described herein again.

Optionally, the OLT may re-allocate a timeslot to each ONU. In an example, the re-allocated timeslot may be allocated in a manner that is the same as or different from an original allocation manner. This is not limited in this application.

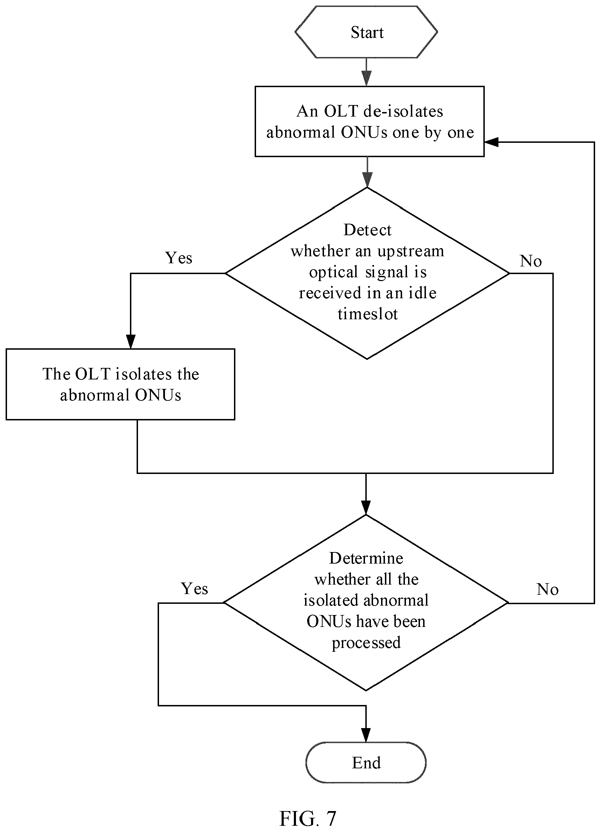

Optionally, the OLT may de-isolate the abnormal ONU. FIG. 7 is a schematic flowchart of de-isolating an abnormal ONU by an OLT. Specifically, the OLT de-isolates abnormal ONUs one by one. In this embodiment, the OLT de-isolates the abnormal ONU in the following manners: restoring the power remotely supplied to the abnormal ONU, turning on the optical switch corresponding to the abnormal ONU, and indicating the abnormal ONU to send the upstream optical signal.

Specifically, the OLT de-isolates a single ONU, and detects whether an upstream optical signal is received in the idle timeslot. If detecting an upstream optical signal in the idle timeslot, the OLT isolates the abnormal ONU again. If detecting no upstream optical signal in the idle timeslot, the OLT determines whether all isolated abnormal ONUs have been processed. If all the isolated abnormal ONUs have been processed, the procedure ends. If all the isolated abnormal ONUs are not processed, the foregoing de-isolation step is repeated.

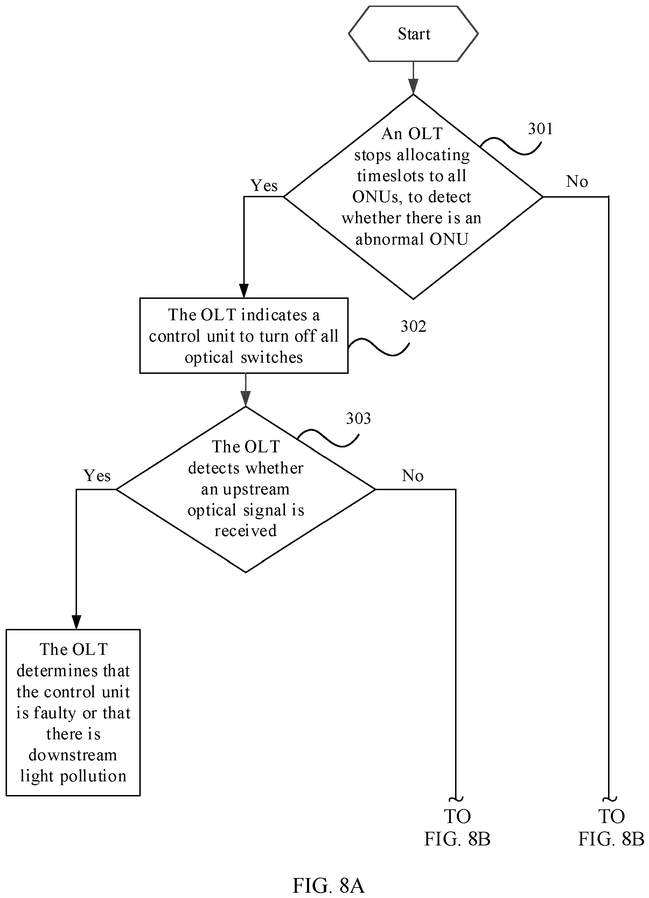

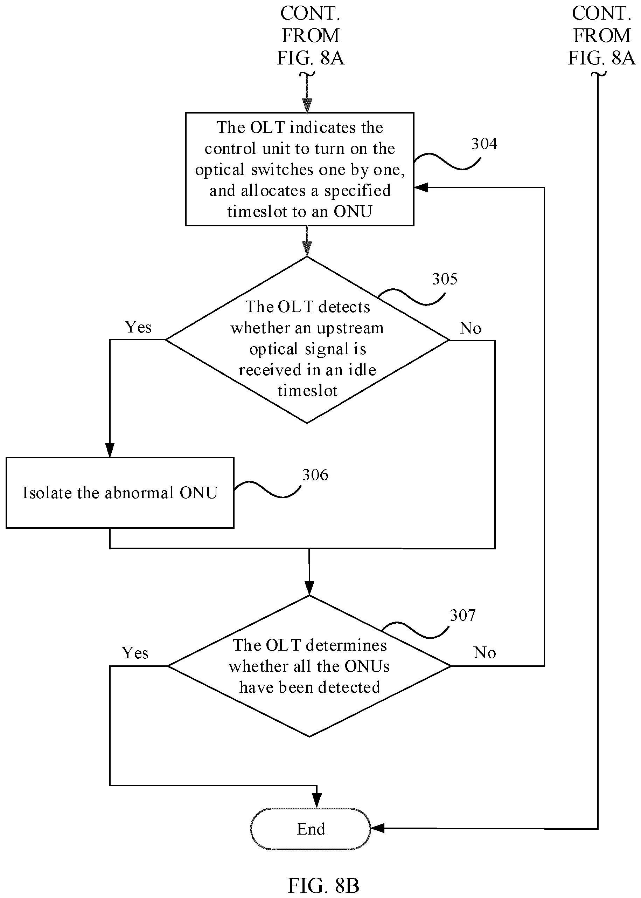

With reference to FIG. 1, on the basis of the embodiment shown in FIG. 3, FIG. 8A and FIG. 8B are a schematic flowchart of an example of a detection method for a passive optical network. In FIG. 8A and FIG. 8B, the following steps are included.

Step 301. An OLT stops allocating timeslots to all ONUs, to detect whether there is an abnormal ONU.

In this embodiment, an example in which the OLT uses Manner 2 (namely, a manner of stopping allocating timeslots to all the ONUs) in the foregoing embodiment is used for description.

Step 302. The OLT indicates a control unit to turn off all optical switches.

Step 303. The OLT detects whether an upstream optical signal is received.

Step 304. The OLT indicates the control unit to turn on the optical switches one by one, and allocates a specified timeslot to an ONU.

Specifically, in this embodiment, the OLT indicates the control unit to turn on the optical switches one by one, and allocates the specified timeslot to an ONU corresponding to an enabled optical transmission channel. Correspondingly, a timeslot other than the specified timeslot allocated to the ONU is an idle timeslot. If detecting an upstream optical signal in the idle timeslot, the OLT may determine that the ONU corresponding to the enabled optical transmission channel is an abnormal ONU.

It should be noted that, because an optical transmission channel corresponding to another ONU is still disabled, the OLT does not need to allocate a timeslot to the another ONU.

Step 305. The OLT detects whether an upstream optical signal is received in the idle timeslot.

In an example, if detecting an upstream optical signal in the idle timeslot, the OLT may determine that the ONU corresponding to the enabled optical transmission channel is an abnormal ONU, and perform step 306.

In another example, if detecting no upstream optical signal in the idle timeslot, the OLT performs step 307.

Step 306. Isolate the abnormal ONU.

Step 307. The OLT determines whether all the ONUs have been detected.

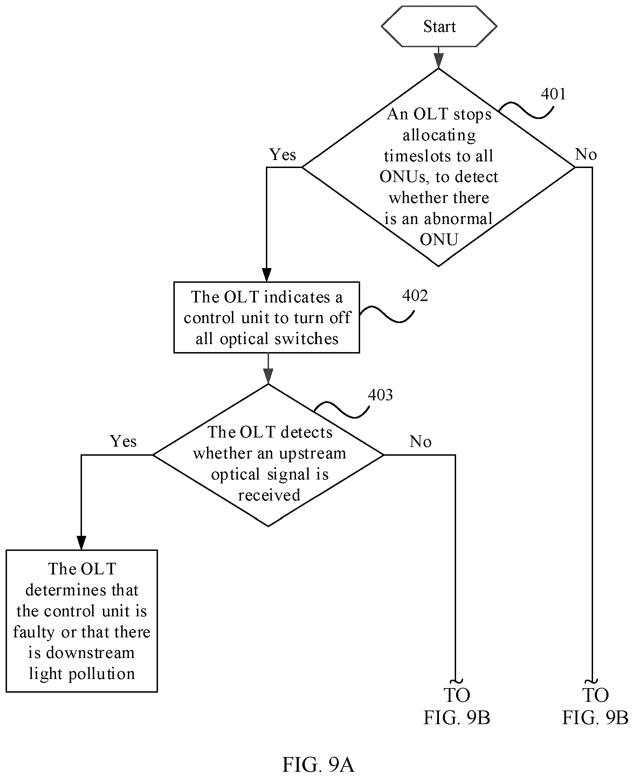

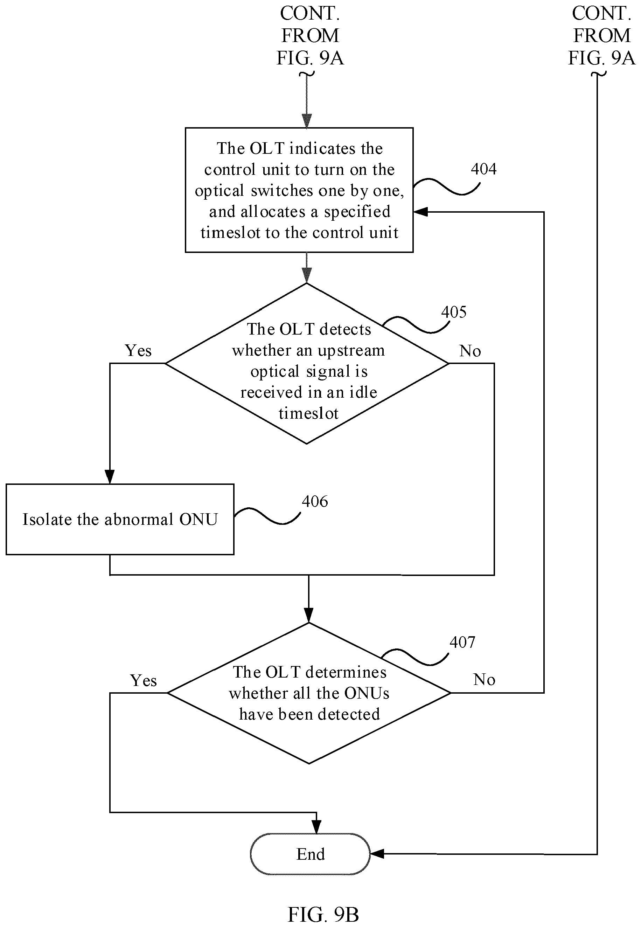

With reference to FIG. 1, on the basis of the embodiment shown in FIG. 3, FIG. 9A and FIG. 9B are a schematic flowchart of an example of a detection method for a passive optical network. In FIG. 9A and FIG. 9B, the following steps are included.

Step 401. An OLT stops allocating timeslots to all ONUs, to detect whether there is an abnormal ONU.

In this embodiment, an example in which the OLT uses Manner 2 (namely, a manner of stopping allocating timeslots to all the ONUs) in the foregoing embodiment is used for description.

Step 402. The OLT indicates a control unit to turn off all optical switches.

Step 403. The OLT detects whether an upstream optical signal is received.

Step 404. The OLT indicates the control unit to turn on the optical switches one by one, and allocates a specified timeslot to the control unit.

Specifically, in this embodiment, the OLT indicates the control unit to turn on the optical switches one by one, and allocates the specified timeslot to the control unit. Correspondingly, a timeslot other than the specified timeslot allocated to the control unit is an idle timeslot. If detecting an upstream optical signal in the idle timeslot, the OLT may determine that an ONU corresponding to an enabled optical transmission channel is an abnormal ONU.

For example, the OLT sends a turn-on instruction 1 to the control unit to instruct the control unit to turn on an optical switch corresponding to an ONU 1. After receiving the instruction, the control unit sends a response signal to the OLT in the specified timeslot corresponding to the control unit, to indicate that the control unit has successfully received the turn-on instruction.

It should be noted that after allocating the timeslot to the control unit, the OLT needs to preferably check the control unit to determine whether the control unit sends an upstream optical signal in the specified timeslot allocated to the control unit.

Step 405. The OLT detects whether an upstream optical signal is received in the idle timeslot.

In an example, if detecting an upstream optical signal in the idle timeslot, the OLT may determine that the ONU corresponding to the enabled optical transmission channel is an abnormal ONU, and perform step 406.

In another example, if detecting no upstream optical signal in the idle timeslot, the OLT performs step 407.

Step 406. Isolate the abnormal ONU.

Step 407. The OLT determines whether all the ONUs have been detected.

### Scenario 2

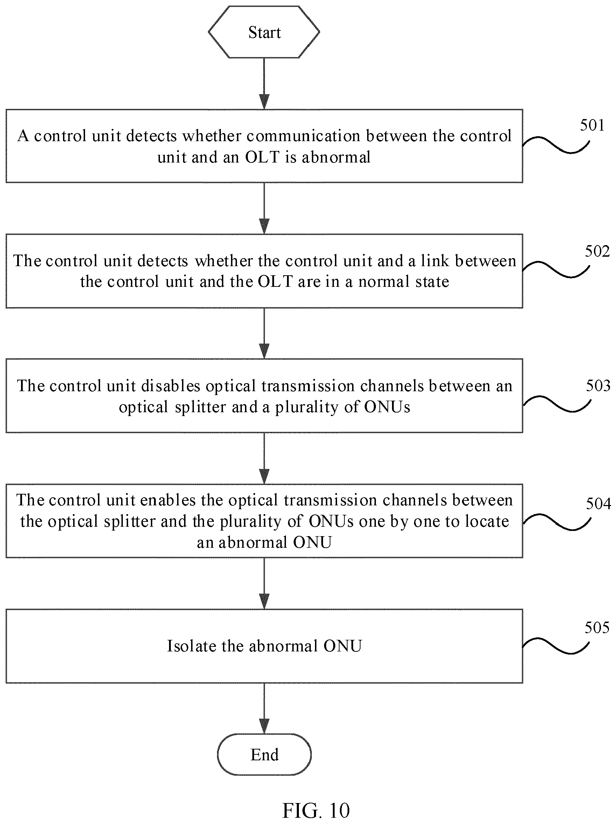

With reference to FIG. 1, FIG. 10 is a schematic flowchart of a detection method for a passive optical network according to an embodiment of this application. In FIG. 10, the following steps are included.

Step 501. A control unit detects whether communication between the control unit and an OLT is abnormal.

Specifically, as described in Scenario 1, when the OLT has "downstream light pollution" and/or when the control unit is faulty, communication between the control unit and the OLT is abnormal. Optionally, that the control unit is faulty includes the following: The control unit is faulty for a device reason of the control unit and/or an optical transmission channel between the control unit and the OLT is faulty.

In this application, a manner in which the control unit detects whether communication is normal varies with a structure of the control unit. Detection manners corresponding to different structures are described in detail in the following embodiments.

Step 502. The control unit detects whether the control unit and a link between the control unit and the OLT are in a normal state.

Specifically, after detecting that communication between the control unit and the OLT is abnormal, the control unit determines whether communication is abnormal for a physical or network reason. For example, communication between the control unit and the OLT may be abnormal because the control unit is in an abnormal state, for example, a port is damaged. Alternatively, communication between the control unit and the OLT may be abnormal because the link between the control unit and the OLT is abnormal, for example, the control unit fails to receive a signal of the OLT due to link blocking or the like, and consequently frame loss is caused.

For example, the control unit may detect receive optical power to determine whether the optical signal of the OLT cannot be successfully received for the physical or network reason. In an example, if the receive optical power is normal, the control unit performs step 503. In another example, if the receive optical power is abnormal, the control unit may determine that the control unit and the link between the control unit and the OLT are in the abnormal state, and the control unit may send an alarm to the OLT. It should be noted that if the control unit is faulty for another reason, the control unit may still detect, through self check, that the control unit is in the abnormal state, and report the information to the OLT.

Step 503. The control unit disables optical transmission channels between an optical splitter and a plurality of ONUs.

Specifically, in this application, when the control unit detects that communication between the control unit and the OLT is abnormal and the abnormality is not caused by the control unit, the control unit may determine that there is an abnormal ONU that causes the "downstream light pollution" of the OLT.

Step 504. The control unit enables the optical transmission channels between the optical splitter and the plurality of ONUs one by one to locate the abnormal ONU.

Specifically, in this application, the control unit may turn on optical switches corresponding to the ONUs one by one to enable the optical transmission channels corresponding to the ONUs.

Optionally, in a check process, if communication between the control unit and the OLT is not abnormal after the control unit turns on an optical switch corresponding to an ONU, the control unit determines that the ONU is a normal ONU. On the contrary, if communication between the control unit and the OLT is abnormal after the control unit turns on an optical switch corresponding to an ONU, the control unit may determine that the ONU interferes with a downstream optical signal of the OLT and the ONU is an abnormal ONU.

Step 505. Isolate the abnormal ONU.

Specifically, an isolation operation performed by the control unit on the ONU includes at least one of the following: cutting off power supplied to the abnormal ONU, and turning off an optical switch corresponding to the abnormal ONU to disable an optical transmission channel corresponding to the ONU.

In an example, a restoring operation performed by the control unit on the abnormal ONU may be independently performed by the control unit. In another example, because communication between the control unit and the OLT has been restored, the OLT may indicate the control unit to perform the restoring operation. Other details of the restoring operation on the abnormal ONU are similar to those in Scenario 1, and are not described herein again.

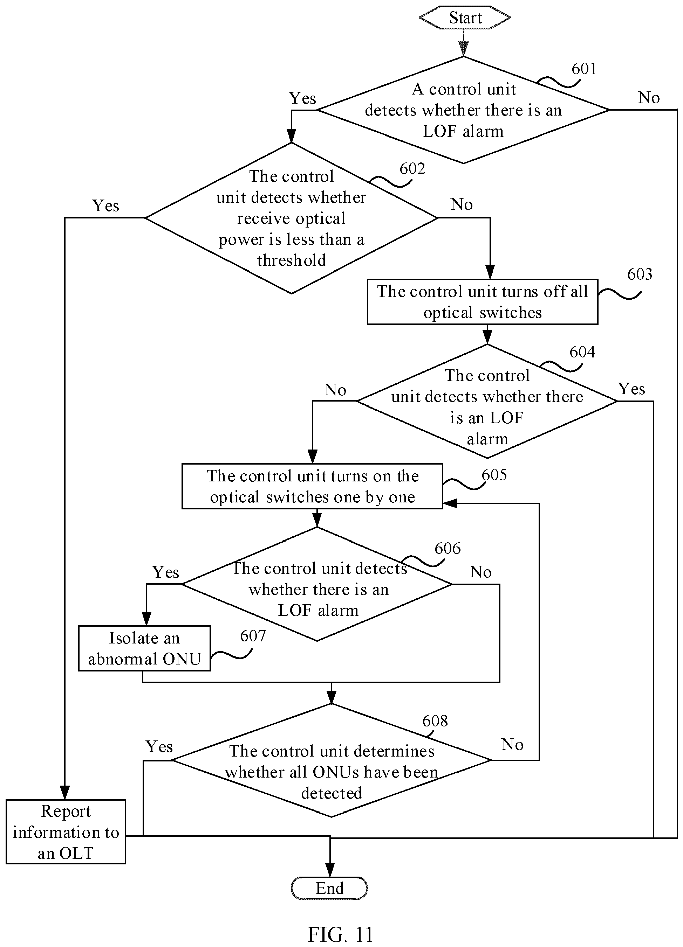

On the basis of the embodiment shown in FIG. 10, FIG. 11 is a schematic flowchart of an example of a detection method for a passive optical network.

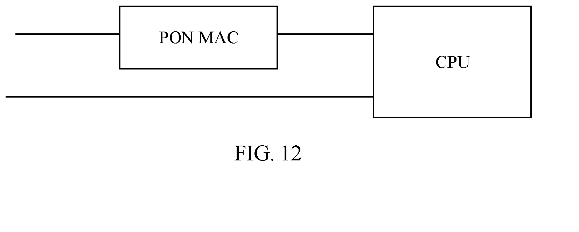

Specifically, as described above, a manner in which the control unit detects whether communication is normal varies with a structure of the control unit. In this embodiment, a structure of the optical splitter and electrical combiner shown in FIG. 2 is used as an example for description. Optionally, FIG. 12 may be a schematic diagram depicting a structure of the control unit in the structure of the optical splitter and electrical combiner shown in FIG. 2. Specifically, the control unit includes but is not limited to a CPU and a PON MAC chip (which may also be referred to as an internal ONU). The internal ONU may perform a function of an ONU. For example, after detecting frame loss, the internal ONU may generate a loss of frame (loss of frame, LOF) alarm. In this application, the internal ONU is integrated with the CPU, in other words, the internal ONU is integrated into the control unit, so that the CPU can directly read the LOF alarm generated by the internal ONU. Optionally, the CPU may further directly read information such as a loss of signal (Loss of Signal, LOS) alarm and optical power that are generated by the internal ONU.

Step 601. The control unit detects whether there is an LOF alarm

Specifically, when an OLT has "downstream light pollution", the internal ONU fails to receive a signal of the OLT, and generates an LOF alarm. The control unit (which is specifically the CPU in the control unit) directly reads the LOF alarm generated by the internal ONU.

Step 602. The control unit detects whether receive optical power is less than a threshold.

Specifically, the CPU in the control unit may directly read the optical power information in the internal ONU to determine whether the receive optical power is less than the threshold. If the receive optical power is less than the threshold, the control unit determines that the control unit is faulty, and sends fault information to the OLT. If the receive optical power is not less than the threshold, the control unit determines that there is an abnormal ONU that causes the downstream light pollution of the OLT, and performs step 603.

Step 603. The control unit turns off all optical switches.

Step 604. The control unit detects whether there is an LOF alarm

Specifically, after the control unit turns off all the optical switches, optical transmission channels corresponding to all ONUs are disabled. In this case, interference caused by the abnormal ONU to a downstream optical signal of the OLT disappears, and the control unit no longer obtains an LOF alarm. For example, if the control unit still receives an LOF alarm, the control unit may determine that the alarm is caused by a non-ONU, and may report the information to the OLT or directly generate alarm information for detection by an engineer. For example, if receiving no LOF alarm, the control unit may determine that communication between the control unit and the OLT is restored. In other words, communication between the control unit and the OLT is affected by an ONU, and the control unit performs step 605.

Step 605. The control unit turns on the optical switches one by one.

Step 606. The control unit detects whether there is an LOF alarm

Specifically, in this embodiment, the control unit detects whether there is an LOF alarm. If there is an LOF alarm, it indicates that an ONU corresponding to an enabled optical transmission channel is an abnormal ONU, and the control unit performs step 607. If there is no LOF alarm, the control unit may determine that the ONU is a normal ONU, and return to step 605 to continue to check another ONU.

Step 607. Isolate the abnormal ONU.

Step 608. The control unit determines whether all the ONUs have been detected.

Specifically, if the control unit checks all the ONUs, that is, if the control unit has isolated the abnormal ONU, communication between the control unit and the OLT is restored. If detecting that all the ONUs are not detected, the control unit returns to step 605 to check another ONU.

In a possible implementation, in this embodiment, because the downstream light pollution of the OLT disappears, a de-isolation operation on the abnormal ONU may be performed by the OLT. For specific steps, refer to Scenario 1.

In another possible implementation, a de-isolation operation on the abnormal ONU may be performed by the control unit. This is not limited in this application.

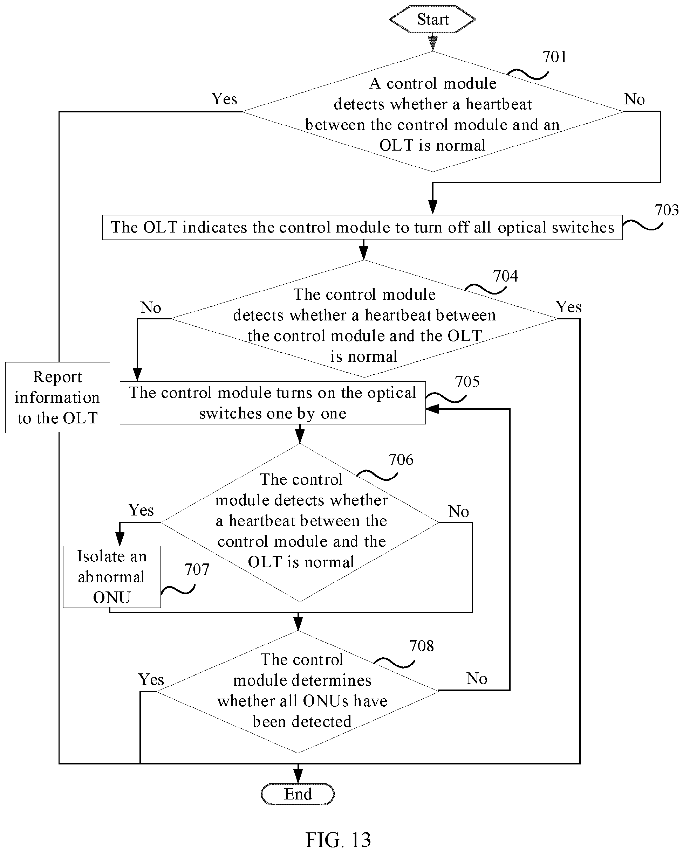

On the basis of the embodiment shown in FIG. 10, FIG. 13 is a schematic flowchart of an example of a detection method for a passive optical network.

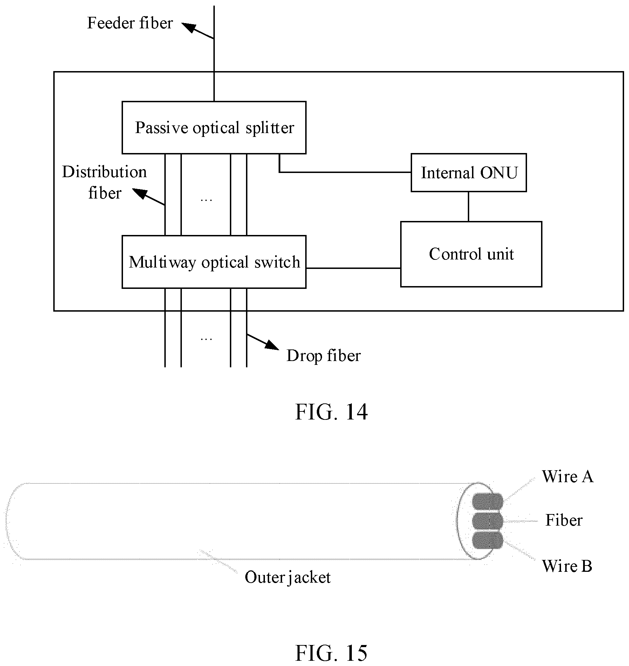

Specifically, in this embodiment, a structure of an optical splitter and electrical combiner shown in FIG. 14 is used as an example for description. Optionally, as shown in FIG. 14, a control unit and an internal ONU in the optical splitter and electrical combiner are separated from each other, and a CPU in the control unit may be connected to an interface (for example, a network port or a serial port) of the internal ONU through an Ethernet interface. In this structure, a heartbeat detection mechanism may be established between the CPU in the control unit and an OLT by using the internal ONU, to detect whether communication between the control unit and the OLT is normal, so as to determine whether the OLT has downstream light pollution. In other words, signaling sent by the control unit is sent to the OLT by using the internal ONU. For example, the heartbeat detection mechanism may be a bidirectional forwarding detection mechanism. This is not limited in this application.

Step 701. The control unit detects whether a heartbeat between the control unit and the OLT is normal

Specifically, the control unit monitors a detection result of the heartbeat between the control unit and the OLT in real time to determine whether communication between the control unit and the OLT is normal. Optionally, if detecting that the heartbeat is abnormal, the control unit performs step 702. If detecting that the heartbeat is normal, the control unit repeatedly performs step 701.

Step 702. The control unit turns off all optical switches.

Step 703. The control unit detects whether a heartbeat between the control unit and the OLT is normal

Similar to step 404, the control unit determines, by detecting the heartbeat between the control unit and the OLT, whether the downstream light pollution is caused by an abnormal ONU. If the downstream light pollution is caused by an abnormal ONU, the control unit performs step 505. If the downstream light pollution is not caused by an abnormal ONU, the procedure ends.

Step 704. The control unit turns on the optical switches one by one.

Step 705. The control unit detects whether a heartbeat between the control unit and the OLT is normal

Specifically, after turning on the optical switches corresponding to ONUs, the control unit may detect the heartbeat between the control unit and the OLT to determine whether communication between the control unit and the OLT is normal. For example, if the heartbeat between the control unit and the OLT is normal, the control unit determines that communication between the control unit and the OLT is normal, and may determine that an ONU corresponding to an enabled optical transmission channel is a normal ONU and perform step 708. If the heartbeat between the control unit and the OLT is abnormal, the ONU corresponding to the enabled optical transmission channel is an abnormal ONU, and the control unit performs step 707.

Step 706. Isolate the abnormal ONU.

Step 707. The control unit determines whether all the ONUs have been detected.

Specifically, if the control unit checks all the ONUs, communication between the control unit and the OLT is restored. If detecting that all the ONUs are not detected, the control unit returns to step 705 to check another ONU.

In a possible implementation, power may be supplied to the ONU by using a local power supply and/or a remote power supply. In this application, a remote power supply manner of the ONU may be as follows: The ONU is connected to a power supply unit by using an optical-electrical hybrid cable. The optical-electrical hybrid cable includes wires that supply power to the ONU, and further includes the foregoing drop fiber. FIG. 15 is a possible schematic diagram depicting a structure of an optical-electrical hybrid cable. Referring to FIG. 15, the optical-electrical hybrid cable includes a fiber (namely, a drop fiber), a wire A, and a wire B. The wire A may be configured to be connected to a live wire, and the wire B may be configured to be connected to a neutral wire. In another possible manner, if a direct current power supply manner is used, the wire A may be connected to a -48 V power supply, and the wire B is connected to a 0 V power supply.

In a possible implementation, the power supply unit may be integrated with the control unit, or may be independent of the control unit. In an example, the power supply unit may be disposed in the optical splitter and electrical combiner. On the basis of the optical splitter and electrical combiners shown in FIG. 2 and FIG. 14, FIG. 16a and FIG. 16b are schematic diagrams depicting structures of an optical splitter and electrical combiner provided a power supply unit. Specifically, the control unit may control, by using an electrical control port, the power supply unit to supply power or stop supplying power to a remote ONU. Power input of the power supply unit may be from a local power supply of the optical splitter and electrical combiner. Optionally, the power input of the power supply unit may use an uninterruptible power supply (Uninterruptible Power System/Uninterruptible Power Supply, UPS). During power failure, the UPS remotely supplies power to the ONU by using the power supply unit. Optionally, the power input of the power supply unit may be from a local power supply of an ONU. For example, an ONU 1 uses a local power supply manner, and the ONU 1 remotely supplies power to the optical splitter and electrical combiner by using the optical-electrical hybrid cable.

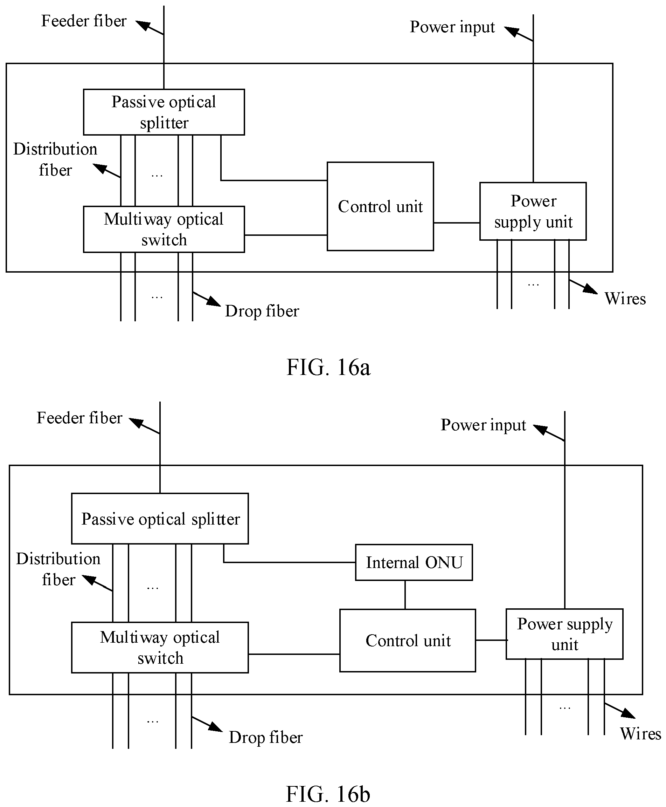

In this application, as described above, in Scenario 1 and Scenario 2, when the OLT and/or the control unit isolates the abnormal ONU, the power remotely supplied to the ONU may be cut off. Specifically, referring to FIG. 16a and FIG. 16b, the control unit may control the power supply unit to stop remotely supplying power to the ONU. It should be noted that, for an ONU to which power is supplied by using the local power supply manner or a combination of the local power supply manner and the remote power supply manner, the ONU cannot be fully isolated when power remotely supplied to the ONU is cut off during isolation. Therefore, another isolation manner needs to be further used. For example, the ONU is indicated to stop sending an upstream optical signal and/or an optical transmission channel is disabled.

In another example, after detecting that there is an abnormal ONU, the OLT may still use a conventional-technology solution. To be specific, the OLT sends a TX-stop instruction to each ONU to instruct the ONU to stop sending an upstream optical signal, and sequentially allows the ONUs to send the upstream optical signal, to accurately locate the abnormal ONU by detecting whether there is an upstream optical signal in an idle timeslot. In addition, this manner may be combined with the power supply manner described in this application to isolate the abnormal ONU. To be specific, after determining the abnormal ONU, the OLT may indicate the control unit to cut off power remotely supplied to the abnormal ONU to isolate the abnormal ONU. It should be noted that a prerequisite for using the isolation manner is that the abnormal ONU does not use the local power supply manner and does not use the UPS power supply manner.

The foregoing mainly describes the solutions provided in the embodiments of this application from a perspective of interaction between network elements. It may be understood that, to implement the foregoing functions, the OLT and the optical splitter and electrical combiner each include a corresponding hardware structure and/or software module for implementing each function. A person skilled in the art should be easily aware that, in combination with units and algorithm steps of the examples described in the embodiments disclosed in this specification, the embodiments of this application may be implemented by hardware or a combination of hardware and computer software. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

In the embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in the embodiments of this application, division into the modules is an example and is merely logical function division, and may be other division in an actual implementation.

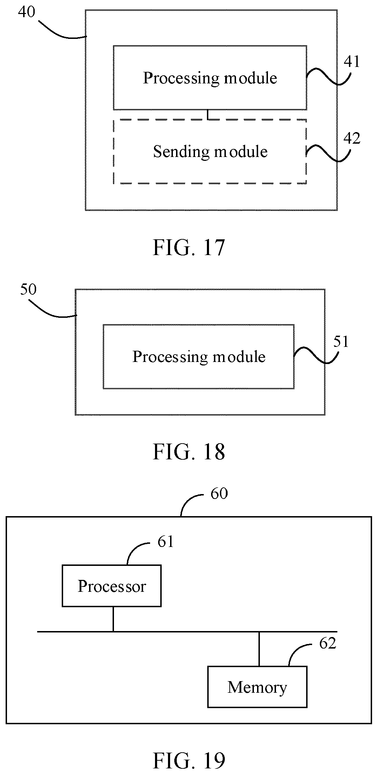

In an example, FIG. 17 is a possible schematic diagram depicting a structure of an OLT 40 in the foregoing embodiments. As shown in FIG. 17, the OLT may include a processing module 41. The module may be configured to: if detecting that there is an abnormal ONU in a plurality of ONUs, disable optical transmission channels between an optical splitter and the plurality of ONUs, and enable the optical transmission channels between the optical splitter and the plurality of ONUs one by one; and in the process of enabling the optical transmission channels between the optical splitter and the plurality of ONUs one by one, if an ONU corresponding to an enabled optical transmission channel does not send an upstream optical signal in a specified timeslot through time division multiplexing, determine that the ONU corresponding to the enabled optical transmission channel is an abnormal ONU.

On the basis of the foregoing technical solution, the OLT 40 further includes a sending module 42. The module may be configured to indicate a control unit to turn off a multiway optical switch, where the control unit is connected to the multiway optical switch and the OLT, the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

On the basis of the foregoing technical solution, the processing module 41 is configured to enable an optical transmission channel corresponding to a single ONU each time.

On the basis of the foregoing technical solution, the processing module 41 is further configured to isolate the abnormal ONU.

On the basis of the foregoing technical solution, the processing module 41 is further configured to: send a TX-stop instruction to the abnormal ONU, where the TX-stop instruction is used to instruct the abnormal ONU to stop sending the upstream optical signal, cut off power remotely supplied to the abnormal ONU, and disable an optical transmission channel between the optical splitter and the abnormal ONU.

On the basis of the foregoing technical solution, the processing module 41 is further configured to de-isolate the abnormal ONU after predetermined duration.

On the basis of the foregoing technical solution, the processing module 41 is further configured to: send a TX-permit instruction to the abnormal ONU, where the TX-permit instruction is used to instruct the abnormal ONU to send the optical signal, restore the power remotely supplied to the abnormal ONU, and enable the optical transmission channel between the optical splitter and the abnormal ONU; and if the abnormal ONU sends the upstream optical signal in the specified timeslot through time division multiplexing, determine that the abnormal ONU is restored.

On the basis of the foregoing technical solution, the multiway optical switch is connected to the plurality of ONUs through drop fibers, the optical transmission channels are borne in the drop fibers, the drop fibers are included in optical-electrical hybrid cables, and the optical-electrical hybrid cable includes wires that remotely supply power to the ONU.

On the basis of the foregoing technical solution, the wires are connected to a power supply and one or more of the plurality of ONUs.

In an example, FIG. 18 is a possible schematic diagram depicting a structure of a control unit 50 in the foregoing embodiments. As shown in FIG. 18, the control unit 50 may include a processing module 51. The module may be configured to: if detecting that communication between the control unit and an optical line terminal OLT is abnormal, disable optical transmission channels between an optical splitter and a plurality of ONUs, and enable the optical transmission channels between the optical splitter and the plurality of ONUs one by one; and in the process of enabling the optical transmission channels between the optical splitter and the plurality of ONUs one by one, if communication between the control unit and the OLT is abnormal, determine that an ONU corresponding to an enabled optical transmission channel is an abnormal ONU.

On the basis of the foregoing technical solution, the processing module 51 is further configured to determine that the control unit and a physical link between the control unit and the OLT are in a normal state.

On the basis of the foregoing technical solution, the processing module 51 is further configured to turn off a multiway optical switch, where the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

On the basis of the foregoing technical solution, the processing module 51 is further configured to enable an optical transmission channel corresponding to a single ONU each time.

On the basis of the foregoing technical solution, the processing module 51 is further configured to isolate the abnormal ONU.

On the basis of the foregoing technical solution, the processing module 51 is further configured to: cut off power remotely supplied to the abnormal ONU, and disable an optical transmission channel between the optical splitter and the abnormal ONU.

On the basis of the foregoing technical solution, the processing module 51 is further configured to de-isolate the abnormal ONU after predetermined duration.

On the basis of the foregoing technical solution, the processing module 51 is further configured to: restore the power remotely supplied to the abnormal ONU, and/or enable the optical transmission channel between the optical splitter and the abnormal ONU; and if communication between the optical splitter and the OLT is normal after the abnormal ONU is de-isolated, determine that the abnormal ONU is restored.

In an example, an embodiment of this application provides a system, including an OLT, a control unit, and a plurality of ONUs. The system may be configured to implement embodiments in Scenario 1 and Scenario 2.

The apparatus in this application may be used in the technical solution of the foregoing method embodiment. Implementation principles and technical effects of the apparatus are similar to those of the method embodiment, and are not described herein again.

The following describes an apparatus provided in an embodiment of this application.

As shown in FIG. 19, the apparatus includes a processor 61 and a memory 62. Optionally, the processor 61 is connected to the memory 62 by using a communications bus.

The memory 62 may include one or more memories. The memory may be a component configured to store a program or data in one or more devices or circuits.

The memory 62 may be standalone, and is connected to the processor 61 through the communications bus. The memory 62 may alternatively be integrated with the processor 61.

The processor 61 may include one or more processors. In an example, when the apparatus 60 is a chip in the OLT or the OLT in the embodiments of this application, the processor 61 may be configured to execute the program stored in the memory, so that the apparatus implements the method performed by the OLT in the foregoing embodiments. For details, refer to the related content in Scenario 1. Details are not described herein again. In another example, when the apparatus 60 may be the control unit or a chip in the control unit in the embodiments of this application, the processor 61 may be configured to execute the program stored in the memory, so that the apparatus implements the method performed by the control unit in the foregoing embodiments. For details, refer to the related content in Scenario 1 and Scenario 2. Details are not described herein again.

It should be understood that, the foregoing and other management operations and/or functions of the elements in the apparatus 60 in this embodiment of this application are separately used to implement corresponding steps of the foregoing methods. For brevity, details are not described herein again.

All related content of the steps in the foregoing method embodiments may be cited in function descriptions of the corresponding functional modules. Details are not described herein again.

An embodiment of this application further provides a computer-readable storage medium. The method described in the foregoing embodiment may be completely or partially implemented by using software, hardware, firmware, or any combination thereof. If the methods are implemented in software, functions used as one or more instructions or code may be stored in or transmitted on the computer-readable medium. The computer-readable medium may include a computer storage medium and a communication medium, and may further include any medium that can transfer a computer program from one place to another. The storage medium may be any available medium accessible to a computer.

In an optional design, the computer-readable medium may include a RAM, a ROM, an EEPROM, a CD-ROM or another optical disc storage, a magnetic disk storage or another magnetic storage device, or any other medium that can be configured to carry or store required program code in a form of an instruction or a data structure and that may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and a microwave) are used to transmit software from a website, a server, or another remote source, the coaxial cable, the optical fiber cable, the twisted pair, the DSL or the wireless technologies such as infrared, radio, and a microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

An embodiment of this application further provides a computer program product. The method described in the foregoing embodiment may be completely or partially implemented by using software, hardware, firmware, or any combination thereof. When the methods are implemented in software, the method may be all or partially implemented in a form of a computer program product. The computer program product includes one or more computer instructions. When the foregoing computer program instruction is loaded and executed on a computer, the procedures or functions described in the foregoing method embodiments are all or partially generated. The foregoing computer may be a general-purpose computer, a special-purpose computer, a computer network, a network device, user equipment or other programmable apparatuses.

The foregoing describes the embodiments of this application with reference to the accompanying drawings. However, this application is not limited to the foregoing specific implementations. The foregoing specific implementations are merely examples, and are not limitative. Inspired by this application, a person of ordinary skill in the art may further make many modifications without departing from the purposes of this application and the protection scope of the claims, and all the modifications shall fall within the protection scope of this application.

## Claims

1. A passive optical network system, comprising an optical line terminal OLT, an optical splitter, and a plurality of optical network units ONUs, wherein
the OLT is configured to: after detecting that there is an abnormal ONU in the plurality of ONUs, disable optical transmission channels between the optical splitter and the plurality of ONUs, and enable the optical transmission channels between the optical splitter and the plurality of ONUs one by one; and
the OLT is further configured to: in the process of enabling the optical transmission channels between the optical splitter and the plurality of ONUs one by one, if an ONU corresponding to an enabled optical transmission channel does not send an upstream optical signal in a specified timeslot through time division multiplexing, determine that the ONU corresponding to the enabled optical transmission channel is an abnormal ONU.

2. The system according to claim 1, wherein the system further comprises a control unit, and the control unit is connected to a multiway optical switch and the OLT;
the control unit is configured to turn on or turn off the multiway optical switch; and
the multiway optical switch is configured to be connected to the optical splitter and the plurality of ONUs, wherein each way of the multiway optical switch connects the optical splitter to one of the plurality of ONUs, and each way of the multiway optical switch is configured to control an optical transmission channel corresponding to one of the plurality of ONUs to be enabled and disabled.

3. The system according to claim 2, wherein
the OLT is further configured to send a turn-off instruction to the control unit, wherein the turn-off instruction is used to instruct the control unit to turn off the multiway optical switch based on the turn-off instruction; and
the control unit is configured to turn off the multiway optical switch based on the turn-off instruction, so that the plurality of optical transmission channels are disabled.

4. The system according to any one of claims 1 to 3, wherein in the process in which the OLT enables the optical transmission channels between the optical splitter and the plurality of ONUs one by one, there is at least one ONU corresponding to an enabled optical transmission channel.

5. The system according to any one of claims 2 to 4, wherein
the OLT is further configured to isolate the abnormal ONU; and
the OLT is further configured to de-isolate the abnormal ONU after predetermined duration.

6. The system according to claim 5, wherein the OLT isolates the abnormal ONU at least one of the following manners:
sending a TX-stop instruction to the abnormal ONU, wherein the TX-stop instruction is used to instruct the abnormal ONU to stop sending the optical signal; indicating the control unit to cut off power remotely supplied to the abnormal ONU; and indicating the control unit to disable an optical transmission channel between the optical splitter and the abnormal ONU.

7. The system according to claim 5 or 6, wherein the OLT de-isolates the abnormal ONU in at least one of the following manners:
sending a TX-permit instruction to the abnormal ONU, wherein the TX-permit instruction is used to instruct the abnormal ONU to send the optical signal, indicating the control unit to restore the power remotely supplied to the abnormal ONU, and indicating the control unit to enable the optical transmission channel between the optical splitter and the abnormal ONU; and
if the abnormal ONU sends the upstream optical signal in the specified timeslot through time division multiplexing, determining that the abnormal ONU is restored.

8. The system according to any one of claims 2 to 7, wherein
the control unit is further configured to: if detecting that communication between the control unit and the OLT is abnormal, disable the optical transmission channels between the optical splitter and the plurality of ONUs, and enable the optical transmission channels between the optical splitter and the plurality of ONUs one by one; and
in the process of enabling the optical transmission channels between the optical splitter and the plurality of ONUs one by one, if communication between the control unit and the OLT is abnormal, determine that an ONU corresponding to an enabled optical transmission channel is an abnormal ONU.

9. The system according to claim 8, wherein
the control unit is further configured to isolate the abnormal ONU; and
the control unit is further configured to de-isolate the abnormal ONU after predetermined duration.

10. The system according to claim 9, wherein the control unit isolates the abnormal ONU in at least one of the following manners:
cutting off power remotely supplied to the abnormal ONU, and disabling an optical transmission channel between the optical splitter and the abnormal ONU.

11. The system according to claim 9 or 10, wherein the control unit de-isolates the abnormal ONU in at least one of the following manners:
restoring the power remotely supplied to the abnormal ONU, and enabling the optical transmission channel between the optical splitter and the abnormal ONU; and
if communication between the control unit and the OLT is normal after the abnormal ONU is de-isolated, determining that the abnormal ONU is restored.

12. The system according to any one of claims 2 to 11, wherein the multiway optical switch is connected to the plurality of ONUs through drop fibers, the optical transmission channels are borne in the drop fibers, the drop fibers are comprised in optical-electrical hybrid cables, and the optical-electrical hybrid cable comprises wires that remotely supply power to the ONU.

13. A detection method for an optical passive network, applied to an optical line terminal OLT, wherein the method comprises:
if detecting that there is an abnormal ONU in a plurality of optical network units ONUs, disabling optical transmission channels between an optical splitter and the plurality of ONUs, and enabling the optical transmission channels between the optical splitter and the plurality of ONUs one by one; and
in the process of enabling the optical transmission channels between the optical splitter and the plurality of ONUs one by one, if an ONU corresponding to an enabled optical transmission channel does not send an upstream optical signal in a specified timeslot through time division multiplexing, determining that the ONU corresponding to the enabled optical transmission channel is an abnormal ONU.

14. The method according to claim 13, wherein the disabling optical transmission channels between an optical splitter and the plurality of ONUs comprises:
indicating a control unit to turn off a multiway optical switch, wherein the control unit is connected to the multiway optical switch and the OLT, the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

15. The method according to claim 13 or 14, wherein in the process of enabling the optical transmission channels between the optical splitter and the plurality of ONUs one by one, there is at least one ONU corresponding to an enabled optical transmission channel.

16. The method according to any one of claims 13 to 15, wherein the method further comprises:
isolating the abnormal ONU; and
de-isolating the abnormal ONU after predetermined duration.

17. The method according to claim 16, wherein the isolating the abnormal ONU comprises at least one of the following:
sending a TX-stop instruction to the abnormal ONU, wherein the TX-stop instruction is used to instruct the abnormal ONU to stop sending the upstream optical signal; cutting off power remotely supplied to the abnormal ONU; and disabling an optical transmission channel between the optical splitter and the abnormal ONU.

18. The method according to claim 16 or 17, wherein the de-isolating the abnormal ONU comprises:
sending a TX-permit instruction to the abnormal ONU, wherein the TX-permit instruction is used to instruct the abnormal ONU to send the optical signal, restoring the power remotely supplied to the abnormal ONU, and enabling the optical transmission channel between the optical splitter and the abnormal ONU; and
if the abnormal ONU sends the upstream optical signal in the specified timeslot through time division multiplexing, determining that the abnormal ONU is restored.

19. The method according to any one of claims 14 to 18, wherein the multiway optical switch is connected to the plurality of ONUs through drop fibers, the optical transmission channels are borne in the drop fibers, the drop fibers are comprised in optical-electrical hybrid cables, and the optical-electrical hybrid cable comprises wires that remotely supply power to the ONU.

20. A detection method for an optical passive network, applied to a control unit, wherein the method comprises:
if detecting that communication between the control unit and an optical line terminal OLT is abnormal, disabling optical transmission channels between an optical splitter and a plurality of ONUs, and enabling the optical transmission channels between the optical splitter and the plurality of ONUs one by one; and
in the process of enabling the optical transmission channels between the optical splitter and the plurality of ONUs one by one, if communication between the control unit and the OLT is abnormal, determining that an ONU corresponding to an enabled optical transmission channel is an abnormal ONU.

21. The method according to claim 20, wherein before the disabling optical transmission channels between an optical splitter and a plurality of ONUs, the method further comprises:
determining that the control unit and a physical link between the control unit and the OLT are in a normal state.

22. The method according to claim 20 or 21, wherein the disabling optical transmission channels between an optical splitter and a plurality of ONUs comprises:
turning off a multiway optical switch, wherein the multiway optical switch is configured to be connected to the optical splitter and the plurality of ONUs, each way of the multiway optical switch connects the optical splitter to one of the plurality of ONUs, and each way of the multiway optical switch is configured to control an optical transmission channel corresponding to one of the plurality of ONUs to be enabled and disabled.

23. The method according to any one of claims 20 to 22, wherein in the process of enabling the optical transmission channels between the optical splitter and the plurality of ONUs one by one, there is at least one ONU corresponding to an enabled optical transmission channel.

24. The method according to any one of claims 20 to 23, wherein the method further comprises:
isolating the abnormal ONU; and
de-isolating the abnormal ONU after predetermined duration.

25. The method according to claim 24, wherein the isolating the abnormal ONU comprises at least one of the following:
cutting off power remotely supplied to the abnormal ONU, and disabling an optical transmission channel between the optical splitter and the abnormal ONU.

26. The method according to claim 24 or 25, wherein the de-isolating the abnormal ONU comprises:
restoring the power remotely supplied to the abnormal ONU, and/or enabling the optical transmission channel between the optical splitter and the abnormal ONU; and
if communication between the optical splitter and the OLT is normal after the abnormal ONU is de-isolated, determining that the abnormal ONU is restored.

27. The method according to any one of claims 22 to 26, wherein the multiway optical switch is connected to the plurality of ONUs through drop fibers, the optical transmission channels are borne in the drop fibers, the drop fibers are comprised in optical-electrical hybrid cables, and the optical-electrical hybrid cable comprises wires that remotely supply power to the ONU.

28. An apparatus, wherein the apparatus comprises:
a memory and a processor, wherein the memory is coupled to the processor; and
the memory stores program instructions, and when the program instructions are run by the processor, the apparatus is enabled to perform the method according to any one of claims 13 to 19.

29. An apparatus, wherein the apparatus comprises:
a memory and a processor, wherein the memory is coupled to the processor; and
the memory stores program instructions, and when the program instructions are run by the processor, the apparatus is enabled to perform the method according to any one of claims 20 to 27.

30. A computer-readable storage medium, wherein the computer-readable storage medium stores a computer program, the computer program comprises at least one segment of code, and the at least one segment of code is executed by an OLT to control the OLT to perform the method according to any one of claims 13 to 19.

31. A computer-readable storage medium, wherein the computer-readable storage medium stores a computer program, the computer program comprises at least one segment of code, and the at least one segment of code is executed by a control unit to control the control unit to perform the method according to any one of claims 20 to 27.
